# EUROPEAN PATENT SPECIFICATION

(11) **EP 1 843 621 B1**
(45) Date of publication and mention of the grant of the patent: **02.10.2013**
(21) Application number: 07105643.6
(22) Date of filing: 04.04.2007
(51) Int. Cl.: H04M 1/667, H04M 1/663, H04W 48/02

(54) **Service restriction apparatus and method for portable communication device**
Vorrichtung und Verfahren zur Diensteinschränkung für eine tragbare Kommunikationsvorrichtung
Appareil de restriction de service et procédé pour dispositif de communication portable

(30) Priority: 05.04.2006 KR 20060030786; 28.06.2006 KR 20060058859
(43) Date of publication of application: 10.10.2007
(73) Proprietor: Samsung Electronics Co., Ltd., Suwon-si, Gyeonggi-do, 443-742 (KR)
(72) Inventor: Park, Jeon Man c/o Samsung Electronics Co., Ltd., Suwon-si, Gyeonggi-do, 443-742 (KR); Choi, Kyu Ok c/o Samsung Electronics Co., Ltd., Suwon-si, Gyeonggi-do,443-742 (KR); Lee, Jung Hoon c/o Samsung Electronics Co., Ltd., Suwon-si, Gyeonggi-do, 443-742 (KR)
(74) Representative: Grünecker, Kinkeldey, Stockmair & Schwanhäusser

(56) References cited:
- EP-A2- 0 454 387
- US-A1- 2004 208 304
- US-A1- 2005 096 009
- US-A1- 2005 154 935

## Description

### BACKGROUND OF THE INVENTION

### Field of the Invention

The present invention relates to a portable communication device and, in particular, to a service restriction apparatus and method for a portable communication device.

### Description of the Related Art

Recent advances in wireless communications have expanded possible applications from simple voice services in early cellular networks to new integrated data applications. As mobile phones gain widespread acceptance as an efficient means of voice and data communication, the market for mobile wireless is dramatically increasing.

The success of mobile communication lies in the abilities to provide instant connectivity almost anytime and anywhere and to provide various services such as wireless Internet access, Short Message Service (SMS), Multimedia Messaging Service (MMS), Voice Messaging Service (VMS), on-demand multimedia services, etc.

Recently, mobile phones have been implemented with additional functions for use as personal schedulers or data communication devices with computers, as well as for basic voice communication.

In order to enhance utilization and expand functionalities of portable phones, mobile phones have recently been integrated with various digital devices, such as camera modules, music players, game modules, health care modules, global positioning system (GPS) modules, digital multimedia broadcasting (DMB) modules, etc.

These phones may be called Internet phones, data communication phones, multimedia phones, health care phones, game phones, GPS phones,MPEG-1 Audio Layer 3 (MP3) phones, and the like, according to their functions. Game phones have become increasingly popular, because they support three dimensional (3D) games together with messenger functions so users can communicate with each other while playing 3D games.

Even though most of the services provided through such portable phones are pay per use services, however, a conventional portable phone does not provide an effective method to limit the utilization of the pay contents and services.

A portable phone is provided with an outgoing call restriction function. The outgoing call blocking is performed based on the type of calls.

A type of call can include a long distance call, international call, pay-per call, and the like.

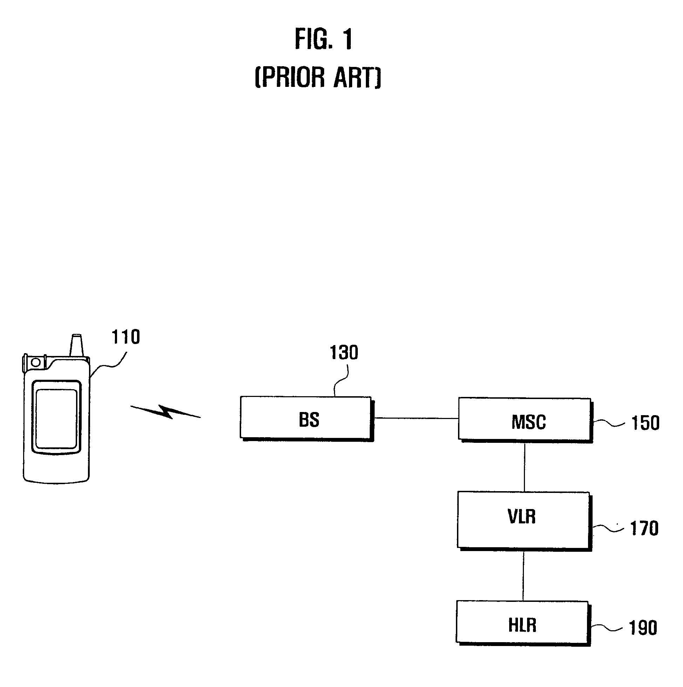

FIG. 1 shows a legacy telephone network according to the prior art. The legacy telephone network includes a portable phone 110, a base station (BS) 130, a Mobile Switching Center (MSC) 150, a Visitor Location Register (VLR) 170, and a Home Location Register (HLR) 190.

The MSC 150 couples with the VLR 170 and HLR 190, which store information about all portable phones that are currently under the jurisdiction of the MSC 150. The VLR 170 and HLR 190 also store information on call types blocked by the portable phone 110.

When a phone number is transmitted from the portable phone 110 to the MSC 150 via the BS 130, the MSC 150 checks in the VLR 170 and HLR 190 whether the phone number is registered to be blocked.

If the phone number is registered to be blocked, the MSC 150 blocks the outgoing call and informs the portable phone 110 that requested the call that the requested phone number is set to be blocked. Otherwise, the MSC 150 performs a call establishment procedure.

However, the conventional call blocking method is limited to blocking the phone numbers by subscriber or by type of phone number.

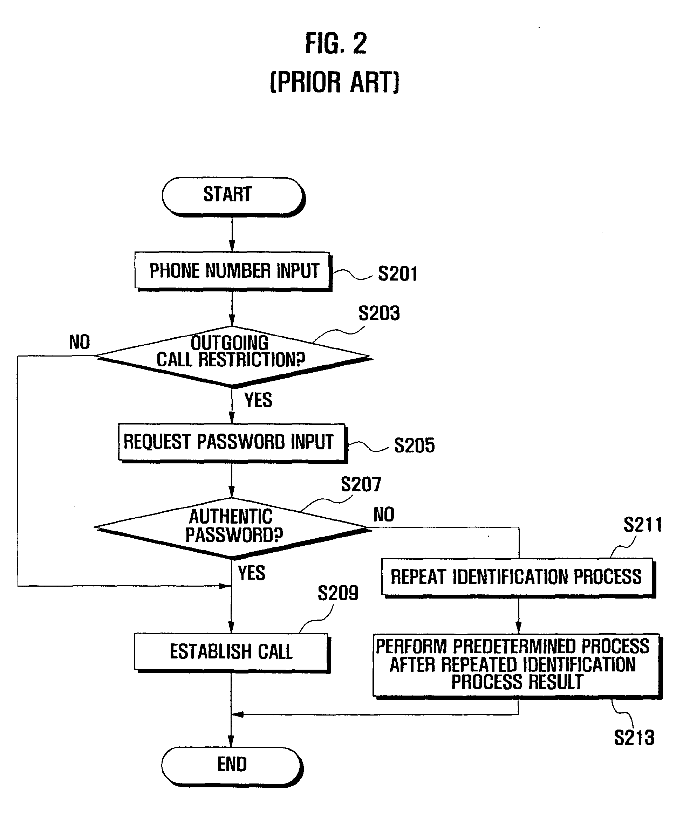

FIG. 2 an outgoing call blocking method for a portable phone according to the prior art. When a phone number for an outgoing call is input (S201), the portable phone determines whether a call restriction function is activated (S203). If the call restriction function is deactivated, the portable phone transmits a call request for establishing a call to a target phone having the input phone number (S209). If the call restriction function is activated, the portable phone requests input of a password (S205). If a password is input, the portable phone determines whether the password is authentic (S207). If the password is identified, the portable phone transmits a call request for establishing a call to a target phone (S209). If the password is not identified, the portable phone repeats the identification process a predetermined number of times (S211) and then performs a predetermined process if the identification fails after the predetermined number of times (S213). For example, if the password identification fails after the predetermined number of times, the portable phone terminates the call request procedure. If, however, the password identification succeeds, the portable phone continues the call request procedure.

As described above, the conventional call blocking method allows restricting of phone calls to specific phone numbers or blocking of all outgoing calls.

However, the conventional call blocking method does not provide a selective phone number screening function in which specific phone numbers are set to allow for calling.

Also, the conventional call blocking method is adopted only for outgoing calls, and does not blocking incoming calls and other additional services.

US 2005/0096009 A1 specifies a method for allowing remote control of the usage of a networked wireless device including incoming communications, outgoing communications, and application launching. Controlling entities, such as parent cellular telephones or web sites, are provided with the ability to select a list of approved anytime incoming communications, or approved incoming and outgoing communications based on time and day. Incoming communications include text messaging and telephone calls. Further, the controlling entity is provided with the ability to reroute to the controlling entity any usage of the wireless device such as incoming communications, outgoing communications, and application launching. Access to usage logs of the wireless device is provided to the controlling entity.

US 2004/0208304 A1 discloses a system and methods through which incoming calls to and/or outgoing calls from a telephone can be controlled. The invention utilizes an authorized caller list to determine whether an incoming call should be connected, and a similar list to determine whether an outgoing call should be connected. The invention can also facilitate the use of new telephone user interfaces, including by iterating through telephone numbers associated with a contact, until communications with the contact are established.

US 2005/0154935 A1 discloses a method for automatically locking a mobile having functions, such as incoming and outgoing calls. The method includes the steps of setting an auto-lock time period to restrict the use of one or more predetermined functions; activating an auto-lock mode to restrict the use of the predetermined functions during the auto-lock time period; and inactivating the auto-lock mode after the auto-lock time period. The auto-lock mode for automatically locking functions of the mobile terminal can be set to be activated only during specified time or during all other times of the day according to the spatial and temporal patterns of the user's daily routine.

### SUMMARY OF THE INVENTION

The object of the present invention is to provide a flexible service utilization restriction method for a portable communication device.

This object is solved by the subject matter of the independent claims.

Preferred embodiments are defined by the dependent claims.

The present invention has been made in an effort to solve the above problems, and it is an object of the present invention to provide a service utilization restriction apparatus and method that are capable of effectively controlling the usage of a portable phone.

It is another object of the present invention to provide a service utilization restriction apparatus and method of a portable phone that are capable of effectively managing the utilization of the services.

It is another object of the present invention to provide a service utilization restriction apparatus and method of a portable phone that are capable of preventing abuse of services.

It is another object of the present invention to provide a service utilization restriction apparatus and method of a portable phone that are capable of limiting utilization of services such as call request/reception, SMS, MMS, VMS, data communication, etc.

It is another object of the present invention to provide a service utilization restriction apparatus and method of a portable phone that are capable of screening incoming and outgoing calls.

It is still another object of the present invention to provide a service utilization restriction apparatus and method of a portable phone that are capable of selectively limiting incoming and outgoing calls with reference to shortcut keys and selectively limiting utilizations of other services by service.

In accordance with an aspect of the present invention, the above and other objects can be accomplished by a utilization restriction method for a portable communication device. The utilization restriction method includes determining whether a service restriction function is activated when an incoming or outgoing call request is detected; determining whether a phone number of the incoming or outgoing call is registered to a communication-allowed phone number list if a service restriction function is activated; attempting to process the incoming or outgoing call if the phone number is registered to a communication-allowed phone number list; and blocking the incoming or outgoing call if the phone number is not registered to a communication-allowed phone number list.

In accordance with another aspect of the present invention, the above and other objects can be accomplished by an outgoing call restriction method for a portable communication device. The outgoing call restriction method includes determining whether a service restriction function is activated when an outgoing call is requested; determining whether a phone number input for the outgoing call is registered to an outgoing call-allowed phone number list if a service restriction function is activated; attempting to make an outgoing call if the phone number is registered to the outgoing call allowed-phone number list; and displaying an announcement message notifying that the phone number is not allowed for outgoing call if the phone number is not registered to an outgoing call-allowed phone number list.

In accordance with another aspect of the present invention, the above and other objects can be accomplished by an outgoing call restriction method for a portable communication device. The outgoing call restriction method includes determining whether a service restriction function is activated when a shortcut number is input; determining whether a phone number mapped to the shortcut number exists if a service restriction function is activated; determining, if a phone number mapped to the shortcut number exists, whether the phone number is registered to an outgoing call-allowed phone number list; attempting to make an outgoing call with the phone number if the phone number is registered to an outgoing call-allowed phone number list; and blocking the outgoing call if the phone number is not registered to an outgoing call-allowed phone number list.

In accordance with another aspect of the present invention, the above and other objects can be accomplished by an incoming call restriction method for a portable communication device. The incoming call restriction method includes determining whether a service restriction function is activated when an incoming call is detected; determining, if a service restriction function is activated, whether a caller's phone number of the incoming call is registered to an incoming call-allowed phone number list; attempting to receive the incoming call if a caller's phone number is registered to an incoming call-allowed phone number list; and blocking the incoming call if a caller's phone number is not registered to an incoming call-allowed phone number list.

In accordance with another aspect of the present invention, the above and other objects can be accomplished by a service utilization restriction method for a portable communication device. The service utilization restriction method includes determining whether a service restriction function is activated when a service is requested; determining whether the service is registered to an allowed service list if a service restriction function is activated; blocking the utilization of the service if the service is not registered to an allowed service list; and permitting utilization of the service if the service is registered to an allowed service list.

In accordance with another aspect of the present invention, the above and other objects can be accomplished by a service utilization restriction method for a portable communication device. The service utilization restriction method includes checking, when a service request is detected, which service is requested; determining whether a service restriction function is activated if the requested service is an outgoing/incoming call service; permitting the outgoing/incoming call service if a service restriction function is not activated; determining whether a phone number of the service request is registered to an outgoing/incoming call allowed phone number list if the service restriction function is activated; attempting to process the service request if the phone number is registered to an outgoing/incoming call allowed phone number list; and blocking the request if the phone number is not registered to an outgoing/incoming call allowed phone number list, and displaying an announcement message notifying that the phone number is blocked for the outgoing/incoming call service.

In accordance with another aspect of the present invention, the above and other objects can be accomplished by a service utilization restriction method for a portable communication device. The service utilization restriction method includes checking, when a service request is detected, which service is requested; determining whether a service restriction function is activated if the requested service is an SMS/MMS/VMS service; permitting the SMS/MMS/VMS service if a service restriction function is not activated; determining whether the SMS/MMS/VMS service is registered to an allowed service list if a service restriction function is activated; permitting and activating the SMS/MMS/VMS service if the SMS/MMS/VMS service is registered to an allowed service list; and restricting utilization of the SMS/MMS/VMS service and displaying an announcement message notifying that use of the service is refused if the SMS/MMS/VMS service is not registered to an allowed service list.

In accordance with another aspect of the present invention, the above and other objects can be accomplished by a service utilization restriction method for a portable communication device. The service utilization restriction method includes checking, when a service request is detected, which service is requested; determining whether a service restriction function is activated if the requested service is a data communication service; permitting the data communication service if a service restriction function is not activated; determining whether the data communication service is registered to an allowed service list if a service restriction function is activated; permitting the data communication service if the data communication service is registered to an allowed service list; and restricting utilization of the data communication service and displaying an announcement message notifying that use of the service is refused if the data communication service is not registered to an allowed service list.

In accordance with another aspect of the present invention, the above and other objects can be accomplished by a service utilization restriction method for a portable communication device. The service utilization restriction method includes requesting a password when an attempt to enter a service restriction function configuration mode is performed; authenticating, if a password is input, the password; permitting entering the service restriction function configuration mode if the password is successfully authenticated; and blocking entering the service restriction function configuration mode and outputting an announcement message notifying that entrance is refused if the password fails.

In accordance with another aspect of the present invention, the above and other objects can be accomplished by a service utilization restriction apparatus for a portable communication device. The service utilization restriction apparatus includes a memory storing application programs for restricting utilization of services in accordance with a preset service restriction mode, and parameters related to the application programs; a service restriction unit, if a service is requested, for checking conditions of the service restriction mode and processing the service request based on the conditions of the service restriction mode; a controller for controlling checking a status of the service restriction mode, determining whether to register a requested service according to the status of the service restriction mode, and permitting or blocking the utilization of the requested service based on the service restriction mode; and a display unit displaying screen images related to the service restriction function and announcement messages notifying a processing status of the service restriction function.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating a legacy telephone network according to the prior art;
FIG. 2 is a flowchart illustrating an outgoing call blocking method for a portable phone according to the prior art;
FIG. 3 is a block diagram illustrating a configuration of a portable phone having a service utilization restriction function according to the present invention;
FIG 4 is a flowchart illustrating a service restriction method for a portable phone according to the present invention;
FIG. 5 is a flowchart illustrating an outgoing call restriction procedure for a portable phone according to the present invention;
FIG. 6 shows example screen images illustrating steps of handling an outgoing call in a service restriction method according to the present invention;
FIGs. 7A to 7E show example screen images for illustrating steps of making an outgoing call in a service restriction method according to another embodiment of the present invention;
FIG. 8 shows example screen images illustrating steps of making an outgoing call in a service restriction method according to another embodiment of the present invention;
FIG. 9 is a flowchart illustrating an incoming call restriction procedure for a portable phone according to the present invention;
FIG. 10 shows example screen images illustrating steps of handling an incoming call in a service restriction method according to the present invention;
FIG. 11 is a flow chart illustrating a service restriction method according to the present invention;
FIG. 12 illustrates a message handling procedure of the service restriction method of FIG. 11;
FIG. 13 illustrates a phone number restriction procedure for a service restriction method according to the present invention;
FIG. 14 is illustrates a procedure for deleting a phone number from a phone number list according to the present invention;
FIG. 15 shows example screen images of a normal phone number list and an outgoing-allowed phone number list according to the present invention;
FIGs. 16A to 16D show screen images illustrating steps of selecting menus for a service restriction function according to the present invention;
FIG. 17 is a flowchart illustrating a utilization-allowed services registration procedure of a service restriction method according to the present invention;
FIG. 18 shows a screen image illustrating an initial screen for display settings of a service restriction method according to the present invention;
FIG. 19 shows example screen images illustrating steps of configuring settings of a service for operating a service restriction method according to the present invention;
FIGs. 20A to 20C show screen images illustrating steps of processing when an input password is not identical with a registered password;
FIG. 21 shows screen images illustrating steps of configuring to enable or disable a service for a service restriction method according to the present invention;
FIG. 22 shows screen images illustrating steps of password change procedure for a service restriction method according to the present invention;
FIG. 23 illustrates steps of a manager registration procedure for a service restriction method according to the present invention;
FIG. 24 illustrates steps of a shortcut number registration procedure for a service restriction method according to the present invention;
FIG. 25 illustrates steps of a shortcut number registration procedure for a service restriction method according to the present invention; and
FIGs. 26A to 26B illustrate steps of a shortcut number registration procedure for a service restriction method according to the present invention.

### DETAILED DESCRIPTION OF PREFERRED EMBODIMENTS

Preferred embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

While the present invention is capable of being implemented in many different forms and embodiments, there are shown in the drawings and described herein in detail specific embodiments thereof, with the understanding that the present disclosure is to be considered as an exemplification of the principles of the invention and is not intended to limit the invention to the specific embodiments illustrated.

The following description of the present invention is for a portable phone having a function limiting utilization of services. In the present invention the utilization of services can be limited by setting the portable phone to a service limitation mode, for services such as call request/response, Short Message Service (SMS), Multimedia Messaging Service (MMS), Voice Messaging Service (VMS), and other data communication services.

For example, the portable phone can allow calling for phone numbers registered with shortcut keys, whereas sending and receiving calls for the unregistered numbers are limited.

The service utilization restriction mode can be set so detailed restriction conditions can be configured by service. Also, the service utilization restriction mode can be configured to screen incoming and outgoing calls with reference to the call numbers.

The portable phone of the present invention can protect abuse of incoming and outgoing call services and other data communication services.

When a service utilization restriction mode is set and a shortcut key is input, the portable phone tries to perform the outgoing call only when a call number is registered for the shortcut key. Even when a call number registered for the shortcut key is input, the outgoing call for the call number can be limited according to conditions preset by the user.

Preferably, the service utilization restriction mode can be configured by a user or manager identified with a Personal Identification Number (PIN).

A portable phone having a service utilization restriction function is explained hereinafter as an example, however the present invention can be applied to other devices such as personal digital assistants (PDAs), smart phones, MP3 Players, laptop computers, personal computers, digital cameras, cellular phones, personal communication service (PCS) phones, dedicated DMB receivers, International Mobile Telecommunication 2000 (IMT-2000) terminals, Universal Mobile Telecommunication Service (UMTS) terminals, etc.

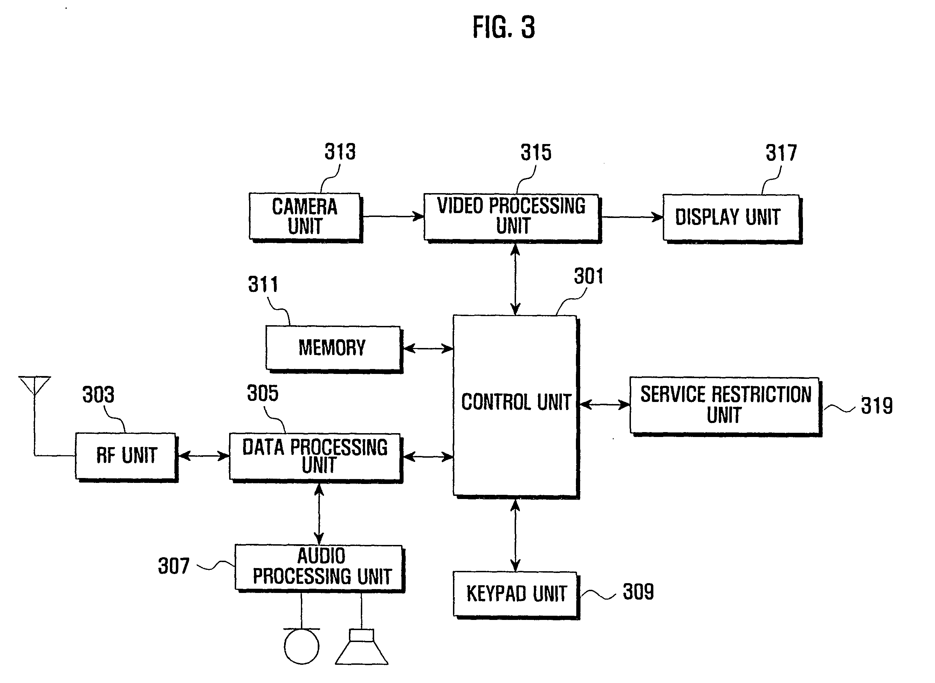

FIG. 3 shows a portable phone having a service utilization control function according to the present invention. The portable phone includes an input means, a processing means, a storage means, an output means, and a communication means.

The input means includes an audio processing unit 307, a keypad unit 309 for user input of alphanumeric data, and a camera unit 313 for taking pictures. When the display unit 317 is implemented as a liquid crystal display (LCD) supporting a touch screen function, the display unit 317 can be included in the input means. The input means is responsible for obtaining various data, such as voice data, alphanumeric data, video data, etc., through the elements constituting the input means.

The processing means includes a video processing unit 315 for converting analog signals of a picture taken by the camera unit 313 into digital video signals, a service restriction unit 319 for controlling utilization of services, a data processing unit 305 for processing audio signals output from the audio processing unit 307 and key input signals generated through the keypad unit 309, and a control unit 301 for controlling overall operation of the mobile terminal.

The storage means stores user data, such as a text document, a picture taken by the camera unit 313, etc., and an application program for controlling the operations of the mobile terminal for service restriction. The storage means includes a memory 311.

The output means includes a display unit 317 for displaying user input information and application data generated by the application program for service restriction, and the audio processing unit 307 for outputting audio data and announcement message related to the service restriction method.

The communication means includes a Radio Frequency (RF) unit 303, which communicates with a web server through at least an antenna. The RF unit 303 can support various types of communication services, such as cellular or other wireless communications.

The RF unit 303 includes a radio frequency transmitter and a radio frequency receiver, both of which are coupled to an antenna which is used for transmitting and receiving radio signals through an air channel. The RF unit 303 is coupled to the data processing unit 305, which processes digital signals into a form that can be transmitted by the transmitter of the RF unit 303 or processes baseband signals received and modulated by the receiver of the RF unit 303 into digital form for other units of the portable phone.

The data processing unit 305 is further coupled to the control unit 301, which controls operation of the portable phone in accordance with instructions stored in the memory unit 311. The data processing unit 305 handles all audio, signal, and data processing needed to receive and send data using RF transmission or Bluetooth transmissions.

The data processing unit 305 also includes a means for encoding and modulating a signal to be transmitted through the RF unit 303 and a means for demodulating and decoding a signal received through the RF unit 303. In addition, the data processing unit is provided with a coder/decoder (codec) pack for supporting encoding and decoding of the video and audio data.

The keypad unit 309 includes a plurality of alphanumeric keys for enabling a user to input alphanumeric characters and various function keys enabling the user to input commands for operating corresponding functions. The keypad unit 309 allows the user to input alphanumeric data and instructions for performing operations, especially associated with the service restriction function.

The memory unit 311 includes a program memory and a data memory. The program memory stores programs for controlling general operations of the portable phone and application programs for controlling the service restriction function of the portable phone.

The data memory temporarily stores data generated during operations of the programs and a database for arranging the data in the form of a table.

The camera unit 313 takes a picture and converts the picture of analog signals into video signals in interoperation with an encoder (not shown). The video processing unit 315 converts video signals from the camera into image signals so the image signals are processed appropriately for the display unit 317. The camera unit 313 includes a camera sensor for sensing an image on the lens and converting an optical image signal into an electric signal and a signal processor for converting an analog signal output from the camera sensor into a digital signal. The camera is implemented with a charge coupled device (CCD) or a complementary metal oxide semiconductor (CMOS) sensor, and the signal processor is a digital signal processor (DSP). Also, the camera sensor and the signal processor can be integrated as a single module.

The video processing unit 315 processes the application data image and menu screen image to be suitable for the display unit 317 and then transmits the processed images to the display unit 317 under control of the control unit 301. The application data image includes data related to the service restriction function and messages for notifying the settings of the service restriction notification.

The video processing unit 315 is provided with a function for compression/decompression of the video data and at least one video codec. The video codec includes a JPEG codec, a MPEG4 codec, Wavelet codec, and the like.

The display unit 317 presents the video data output from the video processing unit 315. The display unit 317 also presents the application data generated by the service restriction application. In addition, the display unit 317 can present the menu screen for operating the service restriction application according to a user's manipulation.

The service restriction unit 319 manages to allow or restrict utilization of additional services, such as pay-per outgoing and incoming calls, SMS/MMS communication, and other data communication, when the service restriction function is activated. The service restriction unit 319 blocks requests for additional services that are not registered to a utilization list and outputs an announcement message for notifying the user that the service requested to transmit or receive is unauthorized for use.

The service restriction unit 319 checks the phone number or shortcut number input by the user for an outgoing call and determines whether the phone number or shortcut number is registered to a permission number list. If the phone number is registered to the permission number list, the service restriction unit 319 allows transmission of the call request. If the phone number is not registered to the permission number list, the service restriction unit 319 blocks transmission of the call request and outputs an announcement message notifying the user that the phone number input by the user is set to be refused.

For an incoming call, the service restriction unit 319 checks the caller's phone number and determines whether the phone number is registered to the permission number list. If the phone number is registered to the permission number list, the service restriction unit 319 allows the user to receive the incoming call. Otherwise, the service restriction unit 319 outputs an announcement message notifying that the incoming call is refused. The announcement message is preferably transmitted to the caller.

The service restriction unit 319 has a management function so when a password is input for accessing or changing settings of the service restriction function the service restriction unit 319 transmits an authorization result to a phone number registered by a manager via an SMS.

The service restriction unit 319 also is responsible for processing configuration of the service restriction function. For example, the service restriction unit 319 allows the user to configure various settings, such as enabling/disabling the service restriction function, password configuration, registration of additional service to allow while the service restriction function is allowed, registration of phone number to transmit the authentication result in SMS message, registration of a shortcut key of the allowed phone numbers for incoming and outgoing calls, etc.

In this embodiment, the service restriction unit 319 is implemented as a separate element; however, it can be integrated into the control unit 301.

The control unit 301 performs controlling the signal exchanges between the elements constituting the portable terminal. For example, the control unit 301 controls the data processing unit 305, the keypad unit 309, the memory unit 311, the camera unit 313, the video processing unit 315, and the service restriction unit 319 so they exchange signals. The data processing unit 305 can be incorporated into the control unit 301.

Especially, the control unit 301 controls operations for allowing or refusing the utilization of services according to preset service restriction settings.

The control unit 301 controls to change the service restriction settings according to signals input through the keypad unit 309. That is, the control unit 301 controls to enable or disable the service restriction function and to select the services to be blocked or allowed, and to register phone numbers to be blocked and allowed for incoming and outgoing. The control unit 301 controls to display data generated during the configuration of the service restriction function and announcement message generated during execution of the service restriction.

For simplifying the explanation the announcement message is output in a form of texts through the display unit 319. However, the announcement message is not limited to a text message, but can be output in a form of a motion picture, a still image, an icon, etc. Further, the announcement message can be displayed together with an audio sound, an alarm sound, a melody, and a voice announcement in cooperation with the audio processing unit 307.

If an incoming or outgoing call is detected, the control unit 301 checks the status of the service restriction function, selectively performs the call reception or call request according to the status of the service restriction function, and displays the announcement message of the service restriction function.

When the service restriction function is activated, the control unit 301 checks a service execution instruction input by the user and determines whether the service requested by the user is restricted. If the service is not restricted, the portable phone executes the instruction. If the requested service is restricted, the portable phone outputs an announcement message notifying the user that the requested service is restricted.

If the service restriction function is deactivated, the control unit 301 executes the instruction to perform the requested service, such as outgoing call request and incoming call reception, SMS/MMS/VMS communication, data communication, etc.

The control unit 301 controls processes for configuring the service restriction function, changing parameters related to the service restriction function, enabling and disabling the service restriction function, and registering the phone numbers and services to be allowed or blocked.

The control unit 301 also requests input of a password when accessed for changing the configuration related to the service restriction function, performs identification of the input password, and transmits the identification result to at least one phone number previously registered by a manager.

The service restriction operation of the above structured portable phone is described hereinafter with reference to the accompanying drawings.

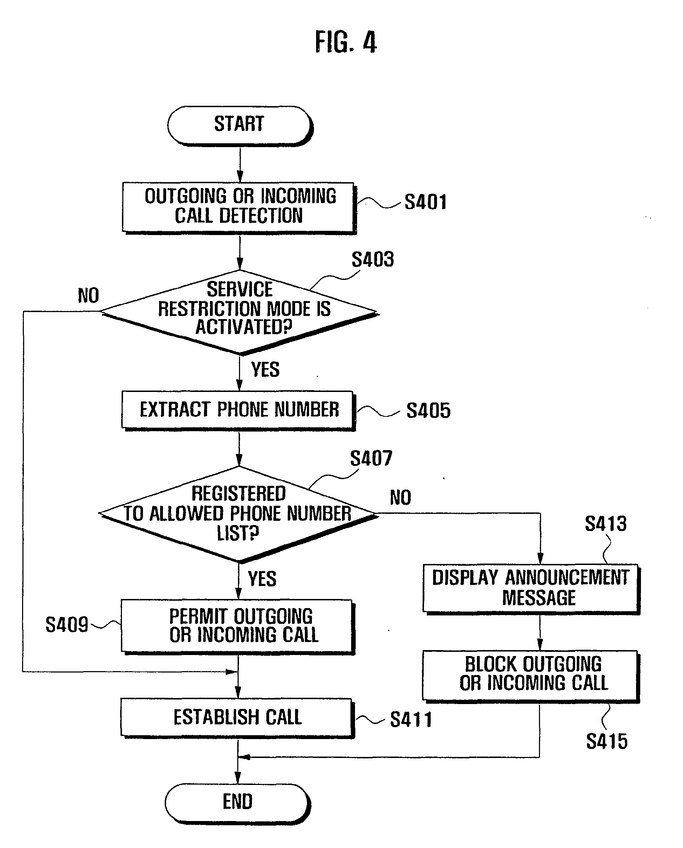

FIG. 4 shows a service restriction method for a portable phone according to the present invention. When an outgoing or incoming call is detected (S401), the mobile phone determines whether the service restriction function is activated (S403).

If the service restriction function is deactivated, the portable phone establishes the call (S411).

If the service restriction function is activated, the portable phone extracts a phone number requested for outgoing call or received for incoming call (S405) and determines whether the extracted phone number is registered to an allowed phone number list for incoming and outgoing calls (S407). If the phone number is registered to the allowed phone number list, the portable phone permits the outgoing or incoming call (S409) and then establishes the call to the phone number of the incoming or outgoing call (S411).

If the phone number is not registered to the allowed phone number list, the portable phone outputs an announcement message for notifying the user that the call to and from the phone number is restricted (S413) and blocks the incoming or outgoing call (S415).

For an outgoing call, the announcement message is output in the form of a popup message so as to notify the user that the service restriction function is activated.

For an incoming call, the announcement message can be transmitted to the external caller's phone as well as being displayed on the receiving portable phone, for notifying the caller that his or her phone number is set as restricted.

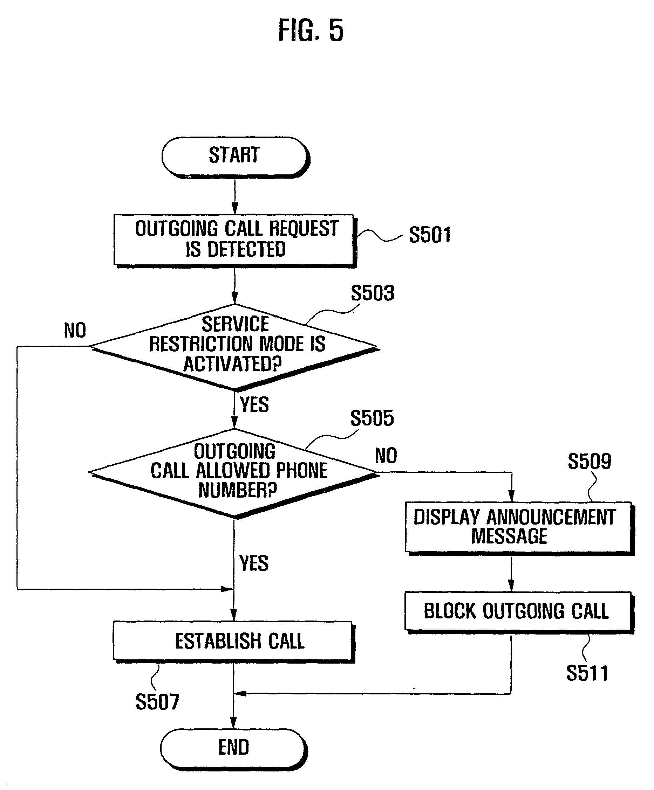

A service restriction for outgoing calls is described hereinafter in more detail with reference to FIG. 5.

FIG. 5 shows an outgoing call restriction procedure for a portable phone according to the present invention. When an outgoing call request is detected, i.e. a phone number is inputted by the user (S501), the portable phone determines whether the service restriction function is activated (S503).

If the service restriction function is deactivated, the portable phone transmits a call request to establish a call to the target phone (S507).

If the service restriction function is activated, the portable phone determines whether the phone number is registered to an allowed outgoing phone number list (S505).

If the phone number is registered to the allowed outgoing phone number list, the portable phone transmits a call request to establish a call to the target phone (S507).

If however the phone number is not registered to the allowed outgoing phone number list, the portable phone outputs an announcement message notifying the user that the phone number is refused by the service restriction function. For example, the portable phone displays an announcement message such as "The service restriction function is activated" or "The phone number is not registered. Please register" through the display unit.

The outgoing calls are screened based on the phone number input by the user. However, the present invention is not limited to the phone number, and can be implemented with the shortcut key input.

For example, the phone numbers for outgoing calls can be mapped to shortcut keys, for example the number keys 1 to 9, # key, * key, or any combination of these keys. Preferably, the # key and * key can be utilized as soft keys for menus, but not for phone numbers.

The number keys 1 to 9, # key, * key, and combinations of these keys are mapped to the phone numbers allowed for outgoing calls so the portable phone determines whether the shortcut key input is allowed when the service restriction function is activated. If an unregistered phone number or an unregistered shortcut number is input, the portable phone refuses to transmit the call request and outputs an announcement message notifying that the phone number or the shortcut number is not allowed to be dialed.

If a shortcut key input is performed, the portable phone determines whether a phone number mapped to the shortcut key is registered to the allowed outgoing phone number list, which is referred to when the service restriction function is activated. If the phone number mapped to the shortcut key is registered to the allowed outgoing phone number list, the portable phone performs a process for making a call to the phone number. The allowed outgoing phone number list can be used for screening the incoming calls.

If the phone number mapped to the shortcut key is not registered to the allowed outgoing phone number list, the portable phone outputs an announcement message notifying the user that the service restriction function is activated and the phone number indicated by the shortcut key is not allowed for outgoing call.

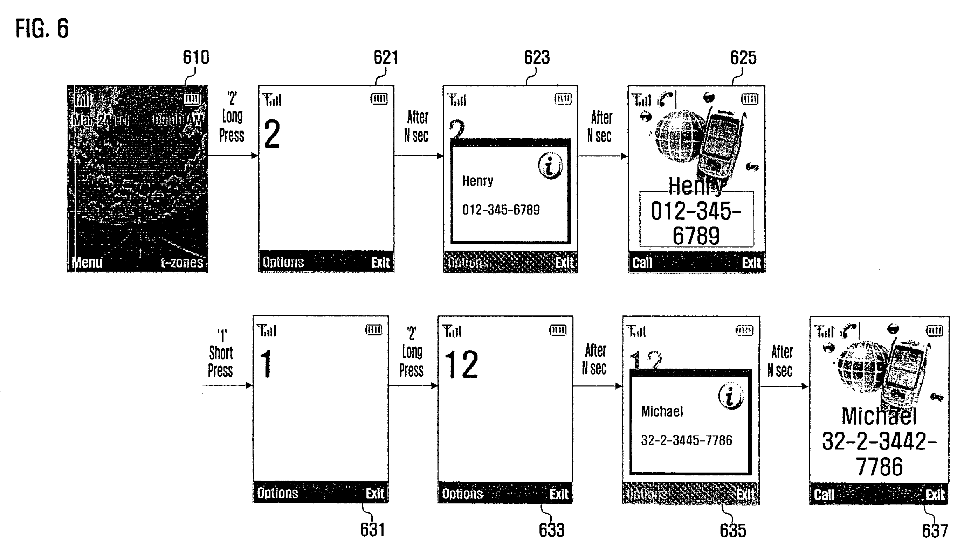

FIG. 6 shows example screen images illustrating steps of handling an outgoing call in a service restriction method according to the present invention. The outgoing call is attempted while the service restriction function of the portable phone is activated.

Reference numeral 610 indicates a screen image when the portable phone is in a waiting mode. Reference numerals 621, 623, and 625 indicate the steps of making calls with shortcuts, and reference numerals 631, 633, 635, and 637 indicate the steps of making a call with a shortcut by combining at least two keys. A phone number of a target phone to call is input by means of a shortcut key or a short key combination mapped to the phone number.

For a single digit shortcut, if a shortcut key of number '2' is pressed during a predetermined time period as shown in the screen image 621, the portable phone recognizes the shortcut key input and retrieves a phone number mapped to the shortcut key of 2. If a phone number is mapped to the number key of 2, the portable phone displays the retrieved phone number together with the called person's name in the form of a popup window as shown in the screen image 623. After a predetermined time period, the portable phone attempts to make a call with the retrieved phone number and shows the calling status and information on the called person, for example, the called person's name and phone number as shown in the screen image 625.

If a phone number is mapped to the shortcut number key, the portable phone determines whether the phone number is in an allowed outgoing phone number list for the service restriction function. If the phone number is in the allowed outgoing phone number list, the portable phone attempts to make a call. Otherwise, the portable phone blocks the call for the phone number.

In the case of a two-digit shortcut, if a second key of number 2 is pressed during a predetermined time period after a first key of number 1 is pressed as shown in the screen images 631 and 633, the portable phone retrieves a phone number mapped to the key combination 12. If a phone number is mapped to the key combination 12, the portable phone displays the retrieved phone number with the called person's name as shown in the screen image 635. After a predetermined time period, the portable phone then attempts to make a call with the retrieved phone number and shows the calling status and information on the called person, for example, the called person's name and phone number as shown in the screen image 637.

If a phone number is mapped to the shortcut key combination, the portable phone determines whether the phone number is in an allowed outgoing phone number list for the service restriction function. If the phone number is in the allowed outgoing phone number list, the portable phone attempts to make a call. Otherwise, the portable phone blocks the call for the phone number.

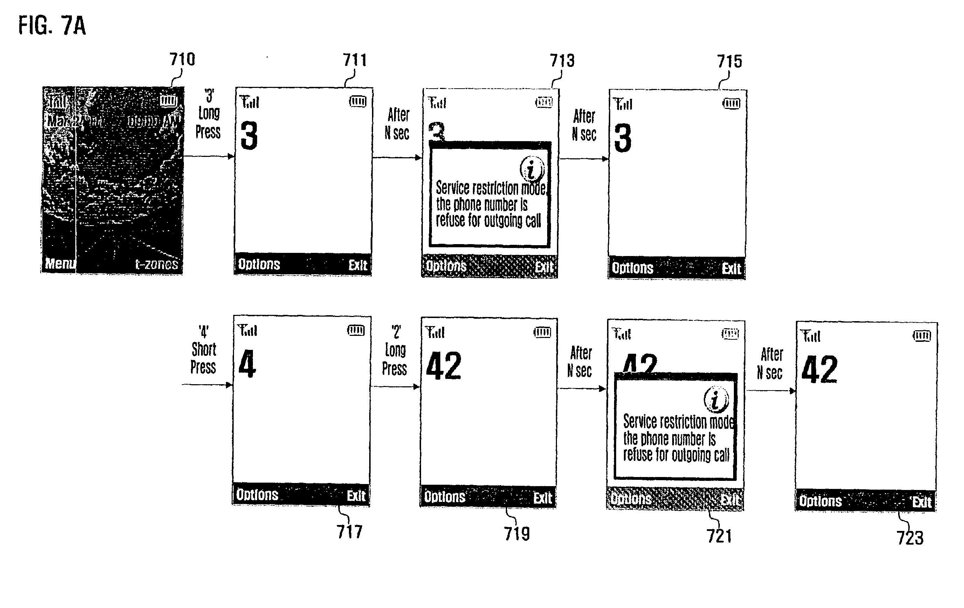

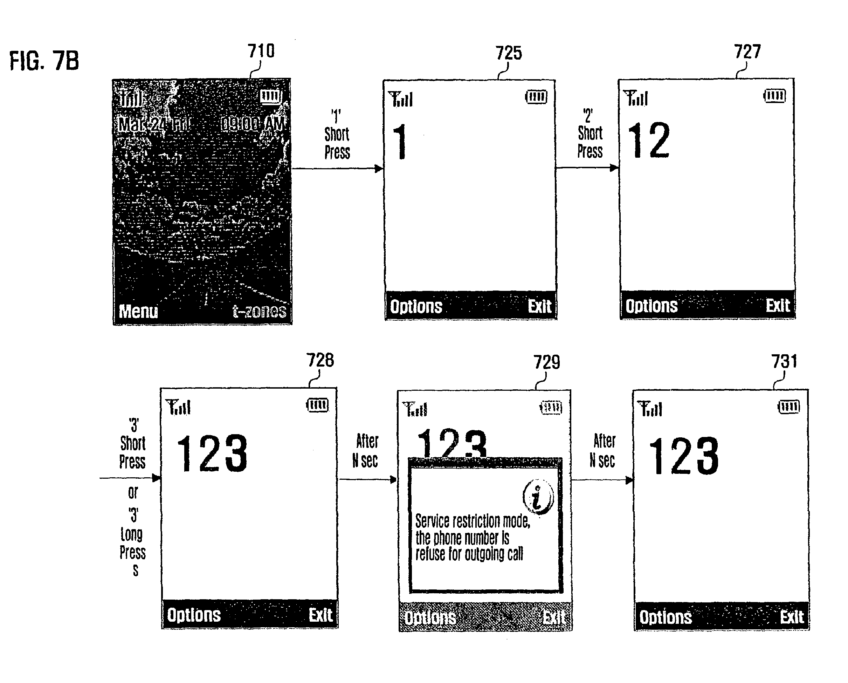

FIGs. 7A to 7C show example screen images illustrating steps of making an outgoing call in a service restriction method according to another embodiment of the present invention. The procedure for screening outgoing calls is depicted especially when the service restriction function is activated.

Reference numeral 710 denotes a screen image when the portable phone is in a waiting mode. Reference numerals 711, 717, 719, 725, 727, and 728 indicate the steps of inputting a shortcut key or a shortcut key combination mapped to a phone number. The reference numerals 713, 721, and 729 indicate the steps of blocking an outgoing call and displaying an announcement message notifying that the outgoing call is blocked. The reference numerals 715, 723, 731 indicate the steps of displaying the input shortcut number after outputting the announcement message notifying that the outgoing call is blocked. A phone number of a target phone to call is input by pressing a shortcut key or a shortcut key combination mapped to the phone number.

For a single digit shortcut, if a shortcut key of number '3' is pressed during a predetermined time period as shown in the screen image 711, the portable phone retrieves a phone number mapped to the shortcut key of the number 3. If a phone number is mapped to the number key of 3, the portable phone determines whether the extracted phone number is registered to an allowed outgoing phone number list.

If the retrieved phone number is not registered to the allowed outgoing phone number list, the portable phone outputs an announcement message such as "Service restriction mode, the phone number is refused for outgoing call" as shown in screen image 713. After a predetermined time period, the portable phone then displays the previously input shortcut number '3' as shown in the screen image 715.

For a two digit shortcut, a set of keys for numbers 4 and 2 are sequentially input as shown in screen images 717 and 719. For inputting the two digit shortcut number, a second key of 2 is pressed during a predetermined period after inputting a first key of 4.

If the shortcut number 42 is input, the portable phone determines whether a phone number is mapped to the shortcut number. If a phone number mapped to the shortcut exists, the portable phone determines whether the retrieved phone number is registered to an allowed outgoing phone number list.

If the retrieved phone number is not registered to the allowed outgoing phone number list, the portable phone outputs an announcement message notifying, as shown in the screen image 721, that the phone number is not allowed for outgoing call in the service restriction mode. After a predetermined time period, the portable phone displays the previously input shortcut number '42' as shown in the screen image 723.

In an example of three digit shortcut, a set of keys for numbers 1, 2, and 3 are sequentially input as shown in screen images 725, 727, and 728. The portable phone recognizes inputting the three digit shortcut number, if a third key of 3 is pressed during a predetermined period after inputting the first and second keys sequentially.

If the shortcut number is input, the portable phone determines whether a phone number is mapped to the shortcut number. If a phone number mapped to the shortcut exists, the portable phone determines whether the retrieved phone number is registered to an allowed outgoing phone number list.

If the retrieved phone number is not registered to the allowed outgoing phone number list, the portable phone outputs an announcement message notifying, as shown in the screen image 729, that the phone number is not allowed for outgoing call in the service restriction mode. After a predetermined time period, the portable phone then displays the previously input shortcut number as shown in the screen image 731.

In this embodiment, the shortcut number is a one, two, or three digit number obtained by coordinating the numbers 1 to 9. However, the number of digits constituting a shortcut number can be varied according to the implementation of the service restriction function.

For a three digit shortcut, it is preferred that three-digit emergency numbers, such as 112, 113, 119, etc., are permitted for outgoing calls regardless of activation of the service restriction function.

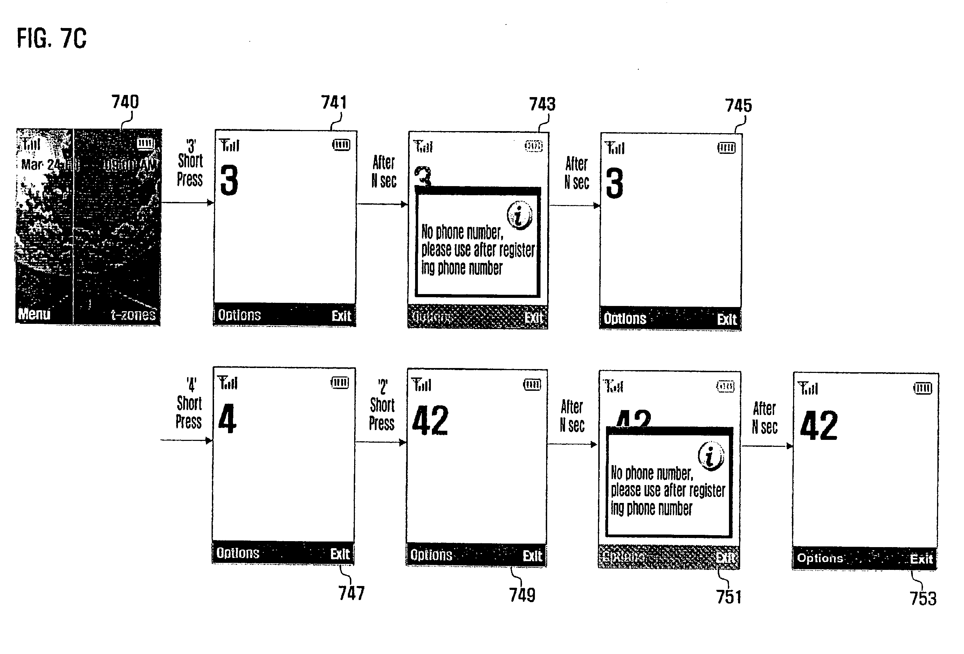

Referring to FIG. 7C, reference numeral 740 indicates a screen image when the portable phone is in a waiting mode. Reference numerals 741, 747, and 749 indicate the steps of inputting shortcut numbers. Reference numerals 743 and 751 indicate the steps of displaying an announcement message for notifying that no phone number is mapped to the input shortcut number. The reference numerals 745 and 753 indicate the screen image after blocking the outgoing call. A phone number of a target phone to call is input by means of a shortcut key or a shortcut key combination mapped to the phone number.

For a single digit shortcut, if a shortcut key of number '3' is pressed during a predetermined time period as shown in the screen image 741, the portable phone recognizes the shortcut number input and retrieves a phone number mapped to the shortcut number 3. If no phone number is mapped to the shortcut number 3, the portable phone outputs an announcement message "no phone number is mapped to the shortcut number, please use the shortcut number after registration" for notifying that the shortcut number is not designated for a phone number as shown in the screen image 743. After a predetermined time period, the announcement message disappears and the shortcut number 3 is displayed again as shown in the screen image 745.

For a two-digit shortcut, if a second key of number 2 is pressed during a predetermined time period after a first key of number 4 is input as shown in the screen images 747 and 749, the portable phone recognizes the shortcut number 42 and retrieves a phone number mapped to the shortcut number 42. If no phone number is mapped to the shortcut number 42, the portable phone outputs an announcement message "No phone number is mapped, please use the shortcut number after registration" for notifying that the shortcut number is not designated for a phone number, as shown in the screen image 751. After a predetermined time period, the portable phone displays the previously input shortcut number 42 as shown in the screen image 753.

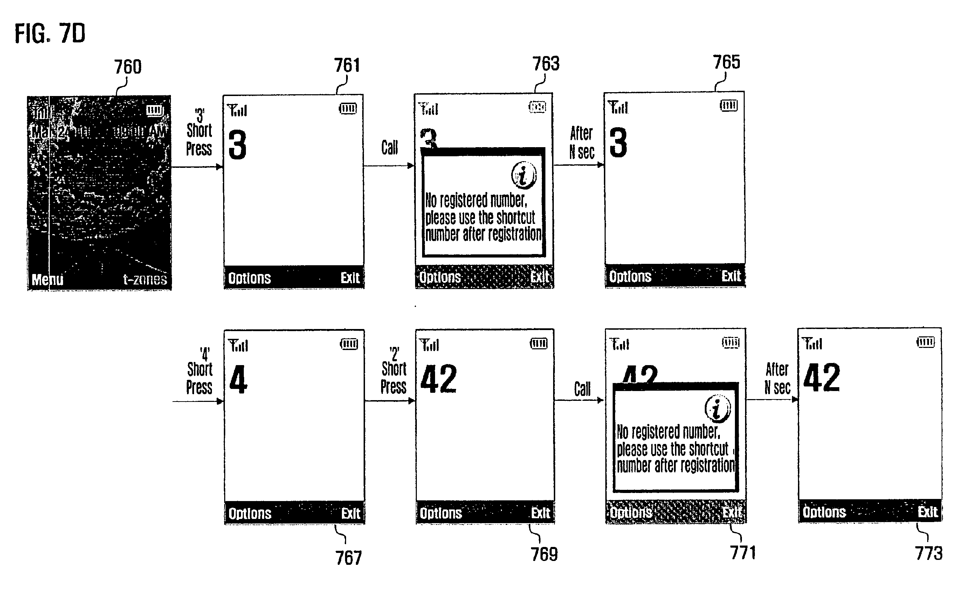

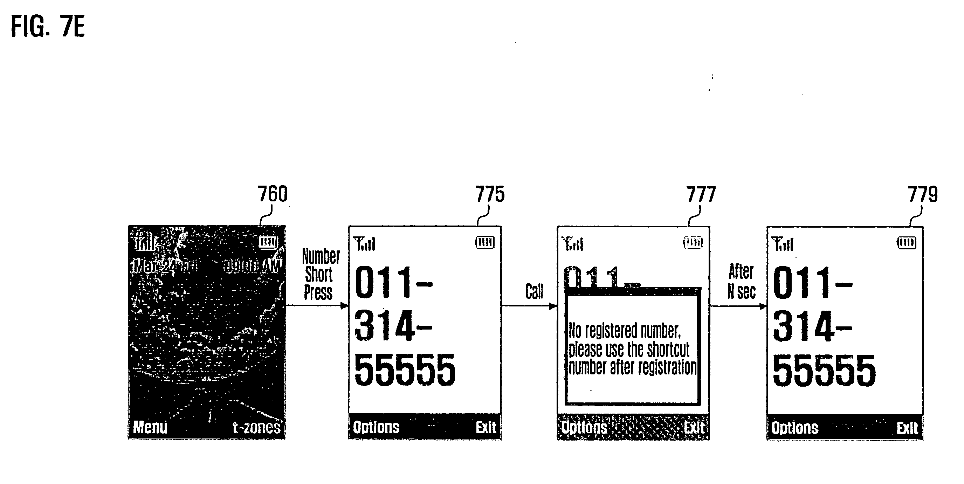

Referring to FIGs. 7D and 7E, reference numeral 760 indicates a screen image when the portable phone is in a waiting mode. Reference numerals 761, 767, 769, and 775 indicate the steps of inputting shortcut or phone numbers. Reference numerals 763, 771, and 777 indicate the steps of displaying an announcement message for notifying that the outgoing call with the phone number mapped to the input shortcut number or directly input is blocked. Reference numerals 765, 773, and 779 indicate the steps of displaying the shortcut number or the phone number input by the user again after blocking the outgoing call. A phone number for an outgoing call can be input directly or by means of a shortcut number.

In the case of a single digit shortcut, if a number key of 3 and a call request key (for example, send key) are sequentially pressed as shown in the screen image 761, the portable phone recognizes the shortcut number input and retrieves a phone number mapped to the shortcut number 3. If there is no phone number mapped to the shortcut number 3, the portable phone outputs an announcement message "No registered number, please use the shortcut number after registration" for notifying that the shortcut number is not designated for a phone number as shown in the screen image 763. After a predetermined time period, the announcement message disappears and the shortcut number 3 is displayed again as shown in the screen image 765.

For a two-digit shortcut, if two digits are input by means of number keys for 4 and 2 and then a call request signal is input by pressing a corresponding key (for example, send key) as shown in the screen images 767 and 769, the portable phone recognizes the input of shortcut number 42 and retrieves a phone number mapped to the shortcut number 42. If no phone number mapped to the shortcut number 42, the portable phone outputs an announcement "service restriction mode, the phone number is not available" for notifying that the shortcut number is not designated for a phone number, as shown in the screen image 771. After a predetermined time period, the portable phone displays the input shortcut number again as shown in the screen image 773.

For directly inputting a phone number, if a full phone number '01131455555' is input as shown in the screen image 775 and a call request signal is input, the portable phone regards the phone number as an unregistered number, and displays an announcement message "Service restriction mode, phone number is not available" for notifying that the phone number is restricted for an outgoing call as shown in screen image of 777. After a predetermined time period, the portable phone displays the phone number again as shown in the screen image 779.

In FIGs. 7D and 7E, the service restriction is performed with shortcut numbers for screening outgoing calls. However, the present invention is not limited to the shortcut numbers but can be implemented with the full phone number such that a registered phone number can be served for an outgoing call.

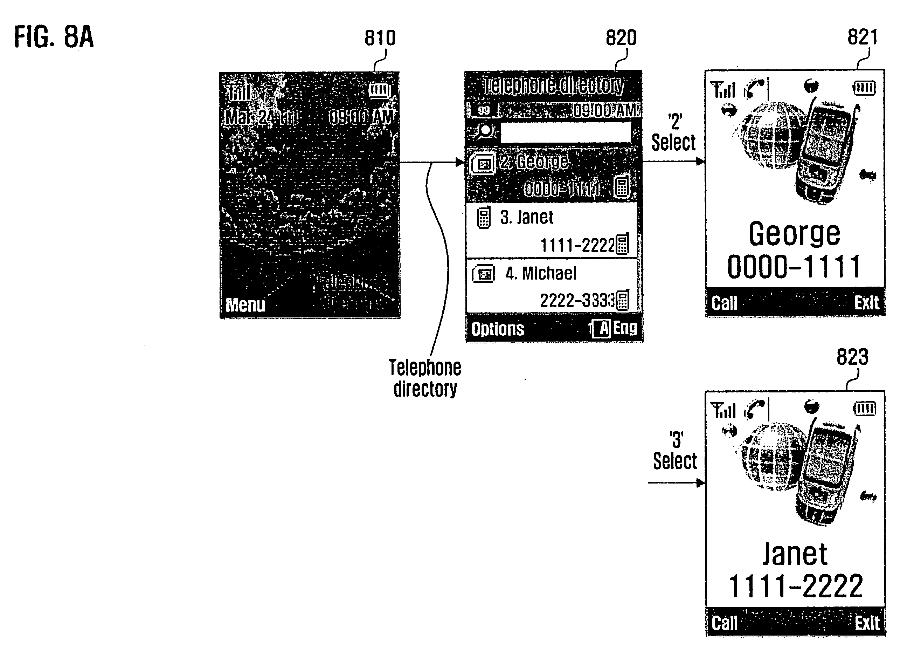

FIG. 8A to 8B show example screen images illustrating steps of making an outgoing call in a service restriction method according to another exemplary embodiment of the present invention.

Reference numeral 810 indicates a screen image when the portable phone is in a waiting mode. Reference numeral 820 indicates a screen image of an allowed phone number list having the phone numbers that are allowed for outgoing calls. Reference numerals 821 and 823 indicate the steps of displaying information related to a phone number selected from the allowed phone number list and making a call with the selected phone number. Reference numeral 825 indicates the step of displaying an announcement message notifying that the portable phone is in a service restriction mode and the input number is blocked for outgoing calls. Reference numeral 827 indicates the step of displaying the allowed phone number list again after showing the announcement message.

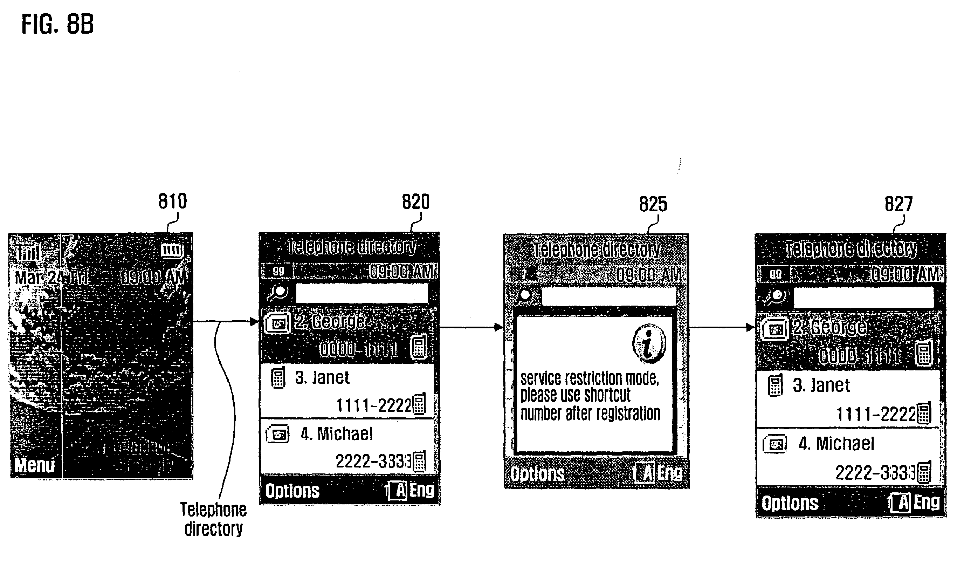

In FIG. 8, if a function key is pressed to attempt to make a call using the allowed phone number list, the portable phone displays the allowed phone number list according to the input signal generated by pressing the function key as shown in the screen image 820.

During the display of the allowed phone number list, the user can navigate the phone number items and select one of the items by pressing a number key indicating a shortcut number provided on each item. If an item is selected, the portable phone displays the status of making a call with the called person's name and phone number corresponding to the selected item as shown in the screen images 821 and 823.

If, however, a shortcut number which is not mapped to any of the phone numbers registered to the allowed phone number list is input, the portable phone displays an announcement message "Service restriction mode is activated, please use the shortcut number after registration" for notifying that the input shortcut number is not available. After a predetermined time period, the announcement message then disappears and the allowed phone number list is displayed again as shown in the screen image 827.

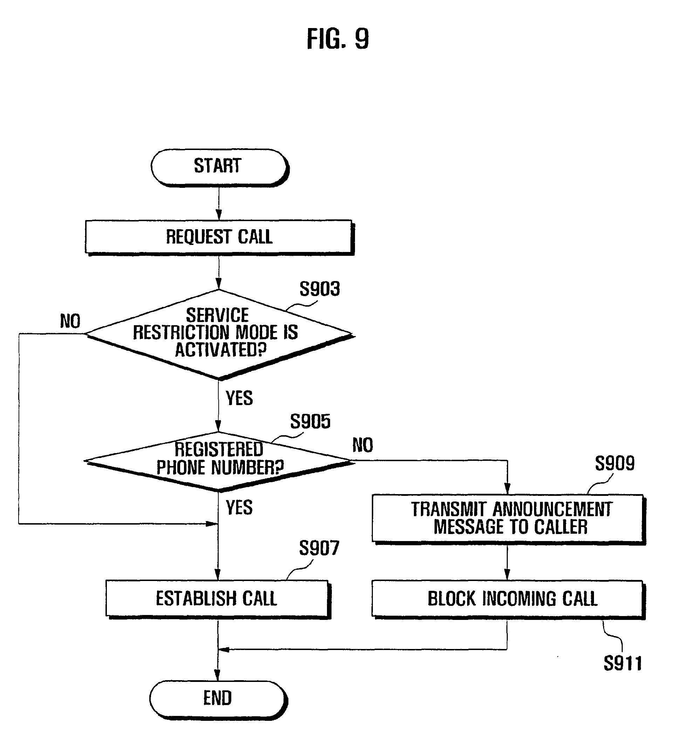

FIG. 9 shows an incoming call restriction procedure for a portable phone according to the present invention. When a call request signal is received (S901), the portable phone determines whether a service restriction mode is activated (S903). If the service restriction mode is deactivated, the portable phone allows the incoming call so as to establish a call to the caller's phone (S907).

If the service restriction mode is activated, the portable phone determines whether the caller's phone number is registered to an allowed phone number list (S905). If the caller's phone number is registered to the allowed phone number list, the portable phone allows the incoming call to establish a call to the caller's phone (S907).

If the caller's phone number is not registered to the allowed phone number list, the portable phone transmits an announcement message (for example, "Service restriction mode, connection is refused.") notifying that the service restriction mode is activated so as not to receive the call (S909).

When the incoming call is blocked according to the service restriction mode, the portable phone transmits the above announcement message for the caller and preferably outputs an announcement message such as "Call from XXX" or "Call from XXX-XXX-XXX." After transmitting the announcement message, the portable phone blocks the incoming call (S911).

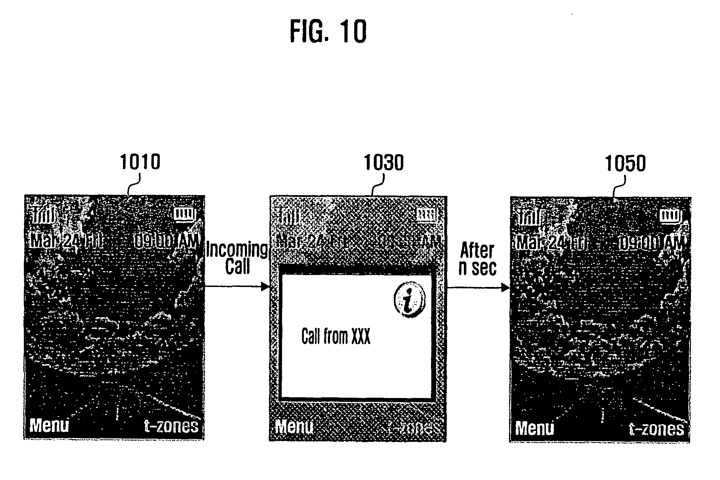

FIG. 10 shows example screen images illustrating steps of handling an incoming call in a service restriction method according to an exemplary embodiment of the present invention.

Reference numeral 1010 indicates a screen image when the portable phone is in a waiting mode, reference numeral 1030 indicates a screen image displaying information on an incoming call, and reference numeral 1050 indicates a screen image after the announcement message disappears.

In FIG. 10, if an incoming call is detected, i.e. if another phone requests a call establishment, the portable phone determines whether a service restriction function is activated. If the service restriction function is not activated, the portable phone establishes a call with the calling phone.

If the service restriction function is activated, the portable phone extracts the phone number of the incoming call and determines whether the extracted phone number is registered to an incoming call allowed phone number list.

If the extracted phone number is registered to the incoming call allowed phone number list, the portable phone establishes a call to the calling phone.

If the extracted phone number is not registered to the incoming call allowed phone number list, the portable phone displays an announcement message (for example, "Call from XXX." or "Call from XXX-XXX-XXXX.") notifying that the phone number of the incoming call is one which is not registered to the incoming call allowed phone number list, as shown in the screen image 1030. After a predetermined time period, the waiting mode screen is then redisplayed as shown in the screen image 1050.

While displaying the announcement message for the incoming call refusal notification, the portable phone can transmit another announcement message (for example, "Service restriction mode, your phone number is blocked.") for notifying that the caller's phone number is blocked by the service restriction function of the called phone.

When an incoming call is blocked by the service restriction function, the portable phone preferably registers the phone number of the blocked incoming call to a rejected call list.

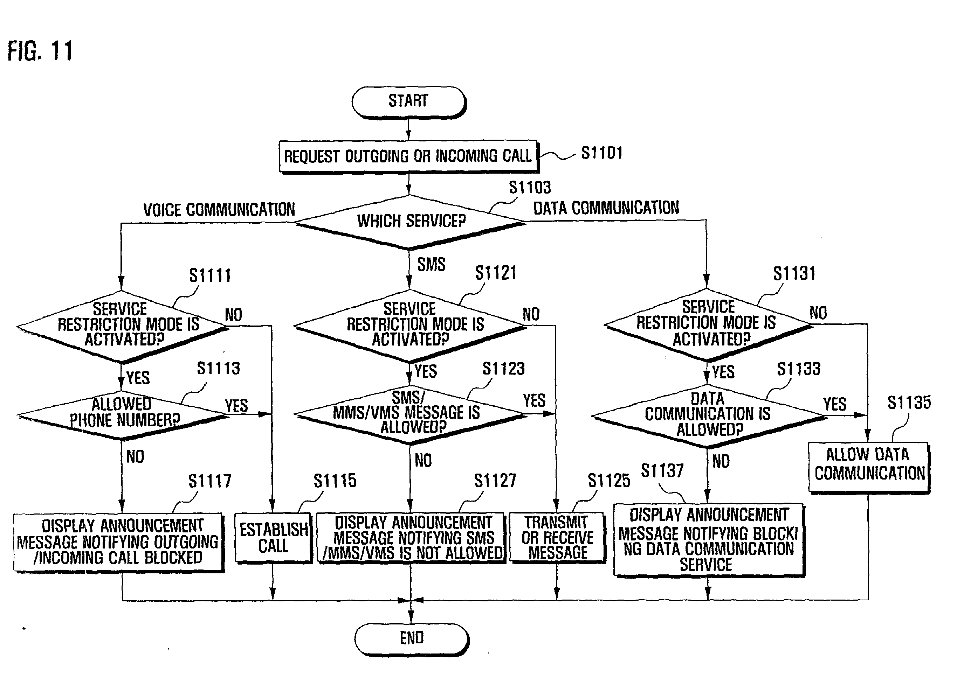

FIG. 11 shows a service restriction method according to the present invention. The portable phone detects outgoing and incoming call requests (S1101). When an outgoing or incoming call request is detected, the portable phone checks the type of the service requested by the detected outgoing or incoming call (S1 103).

The service types include a voice communication, an SMS and a data communication. However, the present invention is not limited to these services, but can be implemented with various other services supported by the portable phone.

If it is determined that the requested service is the voice communication service, the portable phone determines whether the voice communication service restriction mode is activated (S1111). If the voice communication service restriction mode is not activated, the portable phone attempts to establish a call to a counterpart phone (S1115). If the voice communication restriction mode is activated, the portable phone determines whether the phone number of the outgoing or incoming call is registered to an allowed phone number list (S1113).

If the phone number of the outgoing or incoming call is registered to the allowed phone number list, the portable phone attempts to establish a call to the counterpart phone (S1115).

If the phone number of the outgoing or incoming call is not registered to the allowed phone number list, the portable phone displays an announcement message notifying that the phone number of the outgoing or incoming call is blocked by the service restriction function (S1117). For an outgoing call, the portable phone displays the announcement message for the caller. For an incoming call, the portable phone transmits another announcement message for notifying the counterpart user that their call is blocked by the service restriction function as well as displaying the announcement message for the called user.

At step S 1103, if it is determined that the requested service is SMS/MMS/VMS, the portable phone determines whether the service restriction mode is activated (S1121). If the SMS/MMS/VMS service restriction mode is not activated, the portable phone processes the requested SMS/MMS/VMS service (S1125). If the SMS/MMS/VMS restriction mode is activated, the portable phone determines whether the SMS/MMS/VMS service is registered to an allowed service list (S1 123).

If the SMS/MMS/VMS service is registered to the allowed service list, the portable phone processes the requested service so as to transmit an outgoing message or receives an incoming message.

If the SMS/MMS/VMS service is not registered to the allowed service list, the portable phone displays an announcement message notifying that the requested service is not allowed (S 1127).

For an outgoing service request, the portable phone displays the announcement message for the calling user. In the case of an incoming service request, the portable phone transmits another announcement message for notifying the calling user that the requested service is blocked and displays the announcement message for the called user.

In this embodiment, SMS/MMS/VMS services are explained, however, the present invention is not limited to those services but can be implemented with various other services supported by the portable phone.

For message communication of SMS/MMS/VMS service, the service restriction procedure further includes the steps of determining whether the phone number of the incoming or outgoing message is registered to an allowed phone number list, and processes the incoming or outgoing message according to whether the phone number is registered or not.

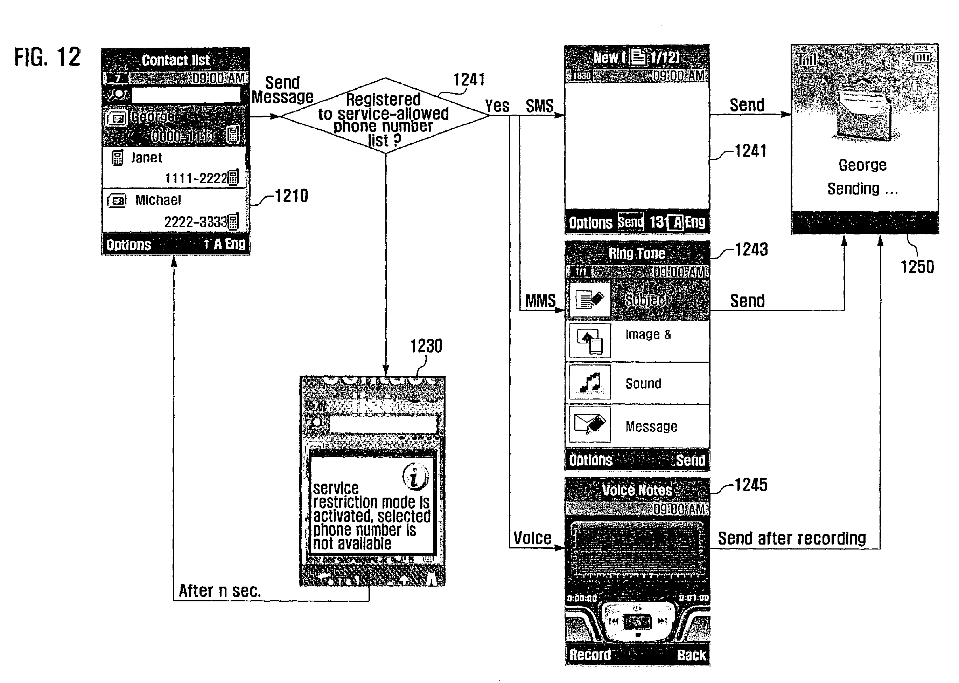

FIG. 12 shows a message handling procedure of the service restriction method of FIG. 11.

Reference numeral 1210 indicates a screen image showing a phone number list having phone number items registered by the user. If an item is selected from the phone number list, the portable phone determines whether the selected phone number is registered to the service-allowed phone number list at step 1220. If the selected phone number is not registered to the service-allowed phone number list, the portable phone displays an announcement message notifying that the service restriction mode is activated and the selected phone number is not available as shown in a screen image 1230.

If the selected phone number is registered to the service-allowed phone number list, the portable phone activates an application for preparing a message to be sent as shown in screen images 1241, 1243, and 1245. After an SMS/MMS/VMS message is prepared, the message is transmitted according to the user's instructions. Reference numeral 1250 indicates a screen image showing a status of sending the prepared message.

For example, if a phone number item is selected from the phone number list shown in the screen image 1210, the portable phone determines whether the selected phone number is allowed for the message service at step 1220.

If the selected phone number is not allowed for the messaging service, the portable phone displays an announcement message (for example, "The service restriction function is activated and the number is not allowed for the message service") notifying that the selected phone number is refused for messaging service as shown in the screen image 1230. After a predetermined time period the portable phone then provides the phone number list screen 1210 again.

If the selected phone number is allowed for the messaging service, the portable phone provides a message input window, i.e. an SMS message input window 1241, an MMS message input window 1243, and a voice message input window 1245. Accordingly, the portable phone allows the user to input an SMS, an MMS, or a Voice message and an instruction for transmitting the message. If the instruction signal for transmitting the message is input, the portable phone transmits the input message while displaying the status of the transmission as shown in the screen image 1250.

A procedure for handling incoming messages using the service restriction method is similar to the outgoing message handling procedure except for the process for checking that the phone number of an incoming message is registered to the service-allowed phone number list. Accordingly, a detailed explanation of the incoming message handling procedure is omitted.

Returning to FIG. 11, if it is determined that the requested service is a data communication service, the portable phone determines whether the service restriction mode is activated (S 1131).

If the service restriction mode is not activated, the portable phone establishes a call to the counterpart phone for transmitting or receiving data (S 1135).

If the service restriction mode is activated, the portable phone determines whether the data communication service is allowed (S 1133). If the data communication service is allowed, the portable phone establishes a call to the counterpart phone for transmitting or receiving data (S1135). If the data communication service is not allowed, the portable phone displays an announcement message for notifying that the data communication service is not allowed by the service restriction function (S1137).

Whereas the portable phone displays the announcement message for the calling user in response to a data transmission request, the portable phone transmits another announcement message for notifying the web server that the data communication service is not allowed by the portable phone and displays the announcement message for the called user in the case of a data communication request from a web server.

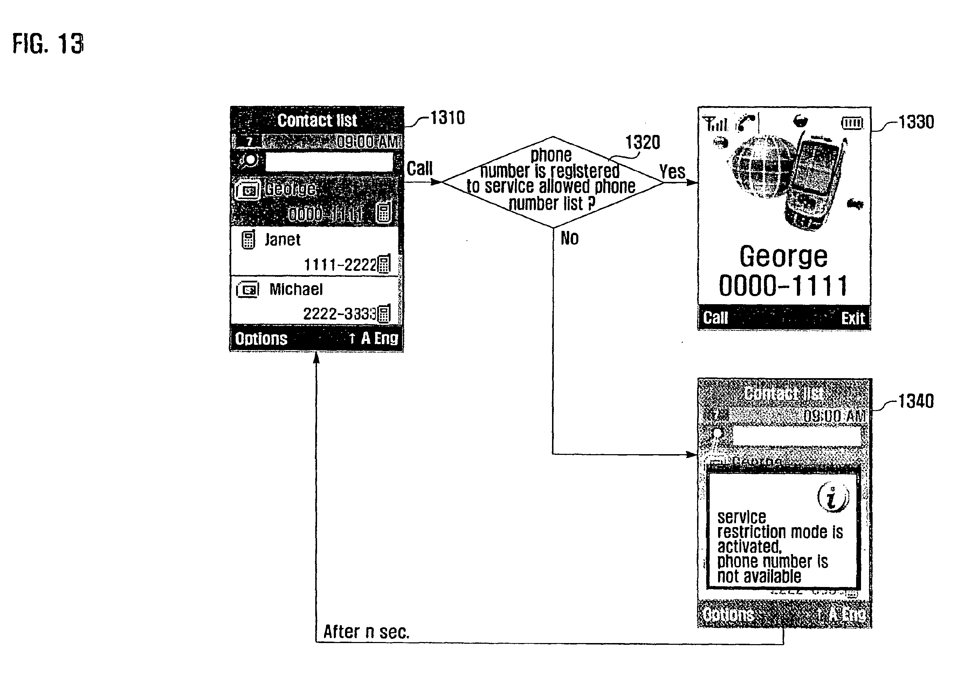

FIG. 13 shows a phone number restriction procedure for a service restriction method according to the present invention.

Reference numeral 1310 indicates a screen image showing a phone number list having phone number items registered by the user, reference numeral 1320 indicates a process determining whether a selected phone number is allowed for the outgoing call, reference numeral 1330 indicates a screen image displaying information related to the selected phone number when the selected phone number is allowed for the outgoing call, and reference numeral 1340 indicates a screen image displaying an announcement message notifying that the selected phone number is refused for the outgoing call when the selected phone number is not allowed for the outgoing call.

For example, if a phone number item is selected from the phone number list of screen image 1310, the portable phone determines whether the selected phone number is registered to a service-allowed phone number list at the process S1320. If the selected phone number is registered to a service-allowed phone number list, the portable phone transmits a call request while displaying a status of the call request transmission as shown in the screen image 1330.

If the selected phone number is not registered to the service-allowed phone number list, the portable phone displays an announcement message notifying that the selected phone number is refused for the outgoing call (for example, "Service restriction mode is activated. The phone number is not available for the service."). After a predetermined time period, the portable phone then displays the phone number list again.

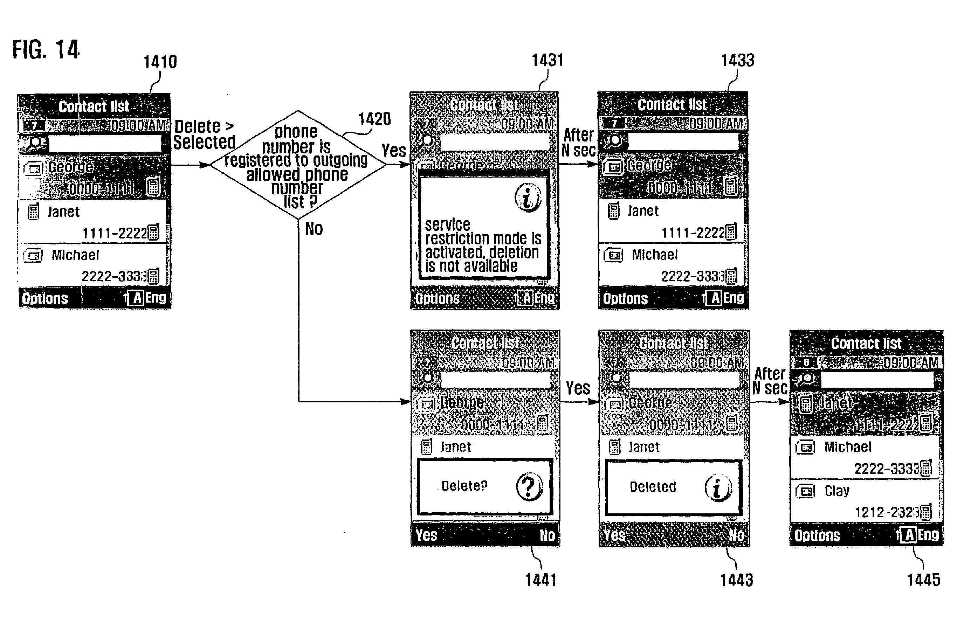

FIG. 14 shows a procedure for deleting a phone number from a phone number list according to the present invention.

The procedure for deleting a phone number from the phone number list of FIG. 14 can be similarly adopted for modifying and adding phone numbers.

Reference numeral 1410 indicates a phone number list having a plurality of phone number items, and reference numeral 1420 indicates a process for determining whether the selected phone number is registered to a service-allowed phone number list. Reference numeral 1431 indicates a screen image displaying an announcement message notifying that the selected phone number item cannot be deleted since the phone number is registered to the service-allowed phone number list, and reference numeral 1433 indicates a screen image displaying the phone number list after the announcement message disappears.

Reference numerals 1441 and 1443 indicate screen images for displaying the status of deleting the selected phone number when the selected phone number is not registered to the service-allowed phone number list, and reference numeral 1445 indicates a screen image displaying the phone number list after deleting the selected phone number item.

If a phone number item is selected from the phone number list of the screen image 1410 and a deletion instruction is input, the portable phone determines whether the selected phone is registered to an outgoing-allowed phone number list at the process 1420.

If the selected phone number is registered to an outgoing-allowed phone number list, the portable phone displays an announcement message (for example, "Service restriction mode. Deletion refused.") notifying that the selected phone number cannot be deleted because the phone number is registered to the outgoing-allowed phone number list, as shown in the screen image of 1431. After a predetermined time period, the portable phone displays the phone number list again as shown in the screen image 1433.

If the selected phone number is not registered to the outgoing-allowed phone number list, the portable phone displays a question message for confirming deletion of the selected phone number as shown in the screen image 1441. If a deletion confirmation signal is input in response to the question message, the portable phone deletes the selected phone number while displaying the deletion status as shown in the screen image 1443. After a predetermined time period, the portable phone displays the phone number list again as shown in the screen image 1445.

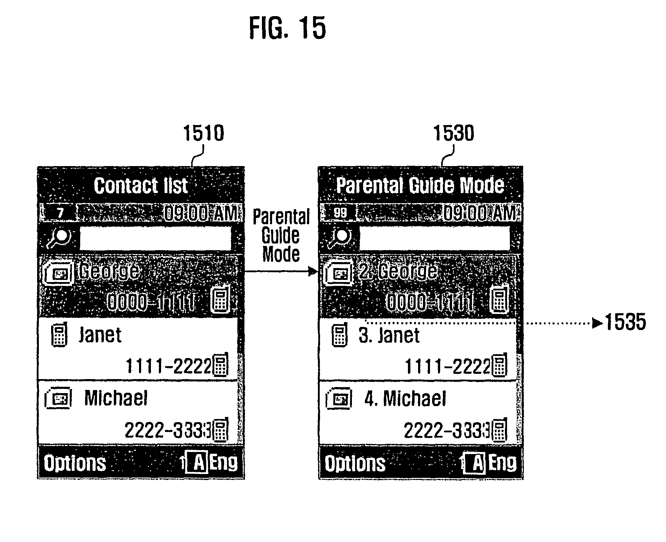

In order to help understand the present invention, differences between a normal phone number list and an outgoing-allowed phone number list generated according to the present invention are described with reference to FIG. 15.

FIG. 15 shows example screen images of a normal phone number list and an outgoing-allowed phone number list according to the present invention.

The outgoing-allowed phone number list is compared to the normal phone number list, however, the present invention is not limited to the outgoing-allowed phone number list but can be implemented with various service-specific incoming and outgoing phone number lists.

Reference numeral 1510 indicates a screen showing a normal phone number list, and reference numeral 1530 indicates a screen showing an outgoing-allowed phone number list. Reference numeral 1535 indicates a shortcut number mapped to an outgoing allowed phone number.

In the present invention, various service-specific phone number lists can be created according to the user's configuration. The outgoing-allowed phone number list is generated to include the phone numbers allowed for outgoing call, and each item of the outgoing-allowed phone number list includes a shortcut number 1535 mapped to the corresponding phone number.

It is to be noted that the normal phone number list of screen image 1510 and the outgoing-allowed phone number list of screen image 1530 are only presented in different ways, but do not occupy different memory regions.

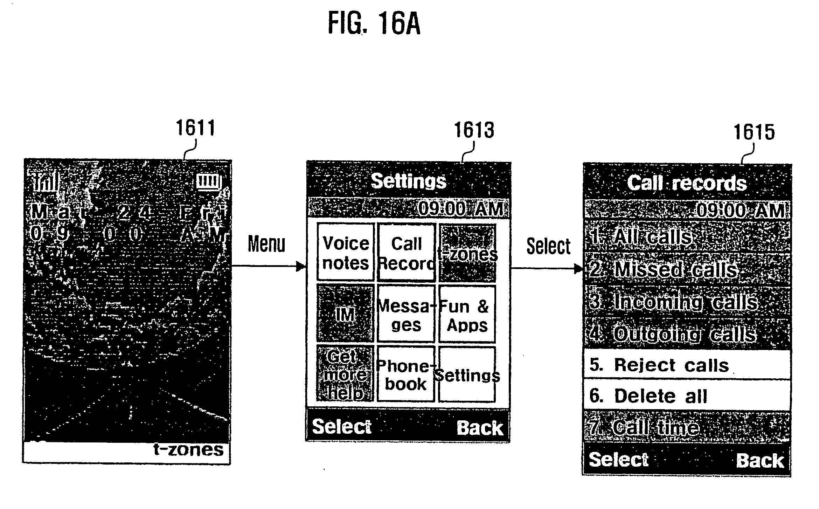

FIGs. 16A to 16D show screen images illustrating steps of selecting menus for a service restriction function according to the present invention.

If a key input is performed for requesting a service menu while the portable phone is in a waiting mode as shown in screen images 1611, 1621, 1631, and 1641, the portable phone displays a service selection menu including a plurality of service items as shown in screen images 1613, 1623, 1633, and 1643.

If a service is selected by a key input while displaying the service selection menu, the portable phone enters a selected service and displays the service-specific menu as shown in the screen images 1615, 1625, 1635, and 1645.

Referring to FIG. 16A, if a service item "Call Record" is selected from the service selection menu as shown in the screen image 1613, the portable phone displays a selected service specific menu, i.e. Call Record service-specific menu as shown in the screen image 1615.

In this embodiment, especially, the call record service-specific menu includes "Reject Calls" menu item. Preferably, records in All Calls, Missed Calls, Incoming Calls, and Outgoing Calls are collected for the phone number registered for the service restriction mode.

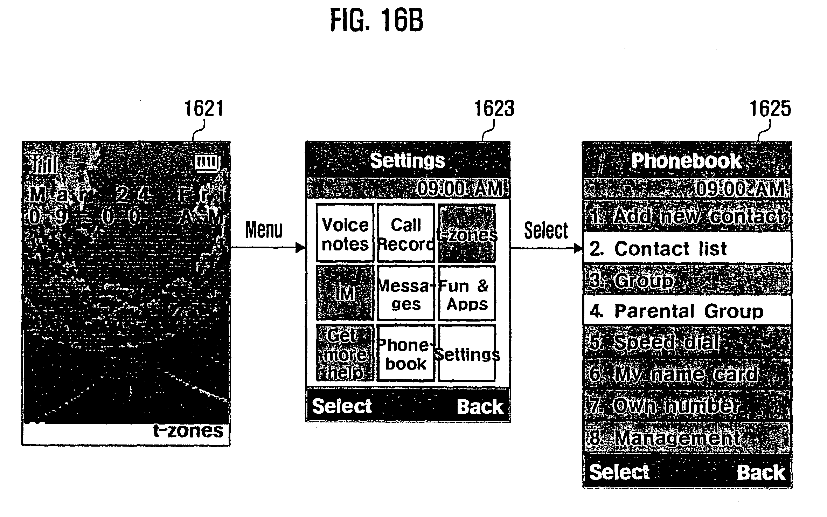

Referring to FIG. 16B, if a service item "Phone Book" is selected from the service selection menu as shown in the screen image 1623, the portable phone displays a selected service-specific menu, i.e. Phone Book service-specific menu as shown in the screen image 1625.

In this embodiment, the phone book service-specific menu especially includes "Contact list" menu item providing the phone number list registered by the user and "Parental Group" menu item providing service-allowed phone numbers registered according to a service restriction function. Preferably, the phone numbers registered to "Parental Group" are automatically grouped.

Preferably, the phone book service-specific menu includes a "Group" menu item that provides information on service groups that are not allowed to be served.

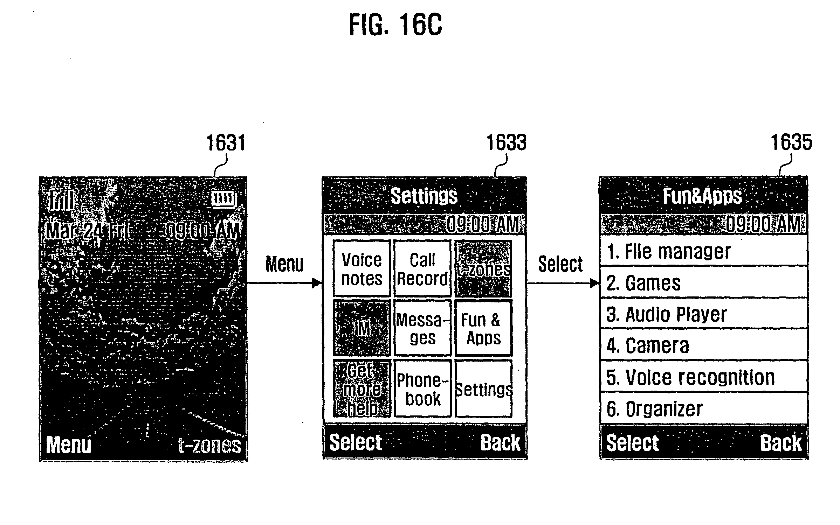

Referring to FIG. 16C, if a service item "Fun & Apps" is selected from the service selection menu by manipulating navigation keys as shown in the screen image 1633, the portable phone displays a selected service specific menu, i.e. the "Fun & Apps" service-specific menu as shown in the screen image 1635.

In this embodiment, especially, the Fun & Apps-specific menu includes "File manager", "Games", "Audio Player", "Camera", and so on.

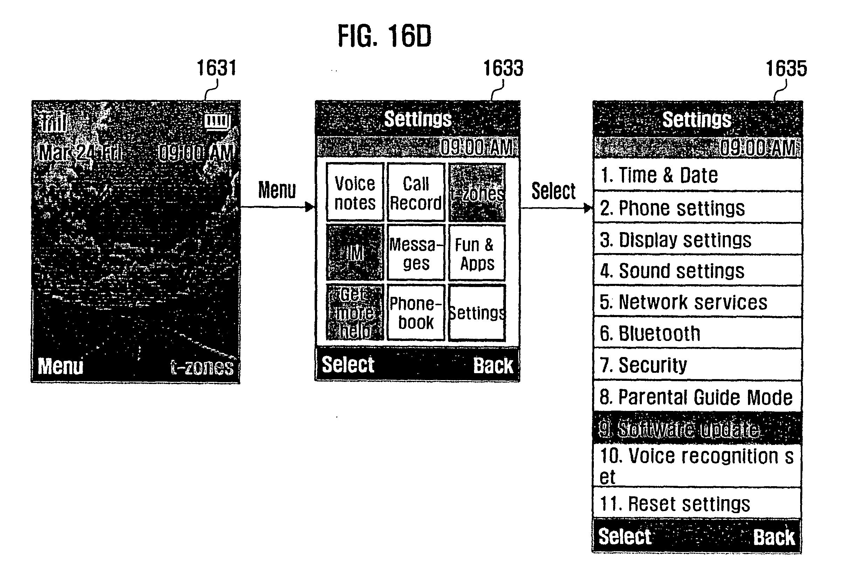

Referring to FIG. 16D, if a service item "Settings" is selected from the service selection menu as shown in the screen image 1643, the portable phone displays a selected service specific menu, i.e. the "Settings" service-specific menu as shown in the screen image 1645.

The "Settings" service-specific menu includes additional service menu items such as "Time & Date", "Phone Settings", "Display Settings", "Sound Settings", "Parental Guide Mode", and so on.

In this embodiment, it is preferred that the menu items are classified into a user access permission class and a manager access permission class so users do not access the menu items of the manager access permission class. For example, "Display Settings", "Parental Guide Mode", and "Software Update" menu items can be set as manager access permission class menu items to block access by general users. Preferably, the manager can access the menu items of all the user access permission class.

Preferably, "Parental Guide Mode" is not influenced during a software update or settings reset process using "Software Update" menu item.

In the screen images 1613, 1623, 1633, and 1643 of FIGs. 16A to 16D, the service items, such as wireless applications protocol (WAP) access service, can be restricted by the manager. Preferably, such services can be marked to distinguish from other services. For example, the services can be marked with a colored line frame or an icon.

The service selection menu screens 1613, 1623, 1633, and 1643 are structured in the form of tiles, however, the present invention is not limited to the tile structure but can be modified in various forms.

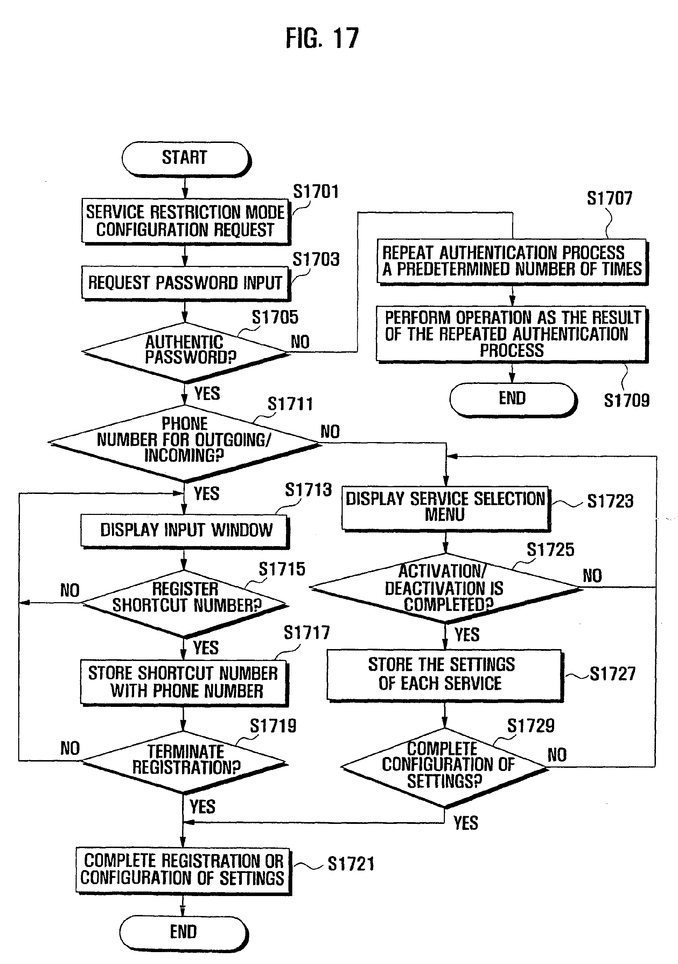

FIG. 17 shows a utilization-allowed services registration procedure of a service restriction method according to the present invention.

The services of which utilization is to be blocked or allowed are registered by a manager, whereby the utilization of the blocked services is restricted.

When a service restriction mode configuration request is input (S1701), the portable phone requests to input a password, e.g., a Personal Identification Number (PIN) (S1703). After a password is input, the portable phone determines whether the password is authenticated as the manager's, i.e. the portable phone determines whether the input password is identical with one registered by the manager (S1705).

If the authentication fails with the input password, the portable phone preferably transmits the authentication failure result to the manager's phone in the form of an SMS message, the phone number of the manager having been previously registered.

If the input password is not identical with the previously registered password, the portable phone performs requests to input the correct password in a predetermined number of times (S 1707) and performs a predetermined operation according to the repeated password input result (S 1709). For example, if the password identification fails until the final time, the portable phone terminates the utilization-allowed services registration procedure. Otherwise, the portable phone performs the step S 1711.

At step S 1705, if the input password is identical with the previously registered password, the portable terminal checks which service-allowed phone number registration is requested, e.g. determines whether the service restriction mode configuration request is for an outgoing/incoming call-allowed phone number registration (S 1711).

The outgoing/incoming call-allowed phone number registration procedure is explained, however the present invention is not limited thereto, and can be adopted for other service-allowed phone number registration procedures.

If the service restriction mode configuration request is for the outgoing/incoming call-allowed phone number registration, the portable phone displays a phone number input window in order for the user to input a target phone number (S1713). After the phone number input is completed, the portable phone awaits input of a shortcut number corresponding to the input phone number (S 1715). If the shortcut number is completely input, the portable phone stores the shortcut number together with the phone number as a service-allowed phone number item (S 1717). After storing the service-allowed phone number item, the portable phone determines whether a key input for terminating the registration procedure (S 1719) is performed.

When the completion of the service-allowed phone number item is recognized, the portable phone can display available shortcut numbers (for example, 1, 3, 15, 23, and so on) that are designated for service-allowed phone numbers.

The service-allowed phone number registration is carried out in such a manner that the portable phone firstly shows available shortcut numbers and the manager designates one of the available shortcut numbers to a phone number. Also, a random or a preferred shortcut number may be firstly input by the manager for checking whether the shortcut number is available.

The phone number registration can be performed for incoming calls and outgoing calls. Accordingly, there can be an incoming call allowed phone number list and an outgoing call allowed phone number list for screening the incoming calls and outgoing calls, respectively. Also, the phone number can be registered to both the incoming and outgoing call-allowed phone number lists. An option for registering a phone number to incoming, outgoing, or both incoming and outgoing call-allowed phone number lists can be provided before inputting the shortcut number or the phone number.

If there is no key input for terminating the registration procedure within a predetermine time interval, the portable phone repeats the step S 1713.

If a key input for terminating the registration procedure is detected, the portable phone completes the registration procedure (S1721).

Returning to step S1711, if the service restriction mode configuration request is not for the outgoing/incoming call-allowed phone number registration, the portable phone displays the service selection menu having service items supporting the portable phone (S1723). Preferably, the service items can be displayed so as to distinguish utilization-allowed services from utilization-refused services.

For example, the portable phone displays the service items allowed to be used when the service restriction mode is activated. Preferably, the service items are pay-per-use services, such as an outgoing/incoming call service, a SMS/MMS/VMS message service, a data communication service, and other application services.

The manager has authorization for registering the services to a utilization-allowed service list or a utilization-refused service list, each service being selected, modified, or added. The manager also can change the status of each service to release the utilization refusal or to cancel the utilization allowance of each service.

While the service selection menu is displayed, the portable phone determines whether activations and deactivations of the service items are completed (1725).

If activations and deactivations of the service items are completed, the portable phone stores the settings of each service (S 1727). After storing settings of each service, the portable phone determines whether a key input is performed for completing configuration of the settings (S 1729). If it is determined that the configuration of the settings is not completed, the portable phone repeats the step S1723. If it is determined that the configuration of the settings is completed, the portable phone completes the registration procedure (S1721).

Although not shown in FIG. 17, the utilization-allowed services registration procedure can further include the step of changing a password.

Also, the utilization-allowed service registration procedure can further include the step of registering a manager and information on the manager.

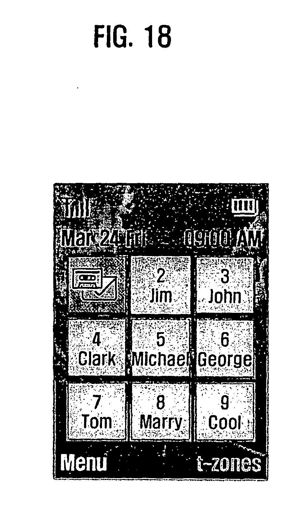

FIG. 18 shows a screen image illustrating an initial screen for display settings of a service restriction method according to the present invention.

In particular, the screen image of FIG. 18 is displayed when the "Display Settings" menu item of FIG. 16D is selected after entering the manager configuration mode. As shown in FIG. 18, the initial screen provides a plurality of user items having shortcut numbers.

The shortcut numbers can be set in accordance with a speed dial function provided in the present invention. The speed dial function will be described later.

Referring to FIG. 18, the initial screen of the selected menu item, i.e. the "Display Settings", can be configured by the manager such that the portable phone displays the initial screen when the corresponding menu item is selected.

That is, the portable phone may display the shortcut numbers mapped to the respective phone numbers in the form of icons together with information on the owners of the phone numbers. Accordingly, the user can easily check and retrieve the information on a target phone and attempt to make a call by selecting a shortcut key mapped to a target shortcut number.

Preferably, a display of the portable phone is implemented with a liquid crystal display (LCD) having a touchscreen. In this case the user can directly make a call by touching an icon displayed on the screen.

In FIG. 18, the shortcut number items are provided in the forms of buttons; however, the shortcut number items can be displayed in other forms.

The shortcut number items displayed on the initial screen of a selected service menu are 1 to 9, however the number of shortcut number items per screen and the number of digits constituting each shortcut number are not limited to those shown in FIG. 18. For example, the initial screen can be configured to include shortcut number items mapped to favorite phone numbers.

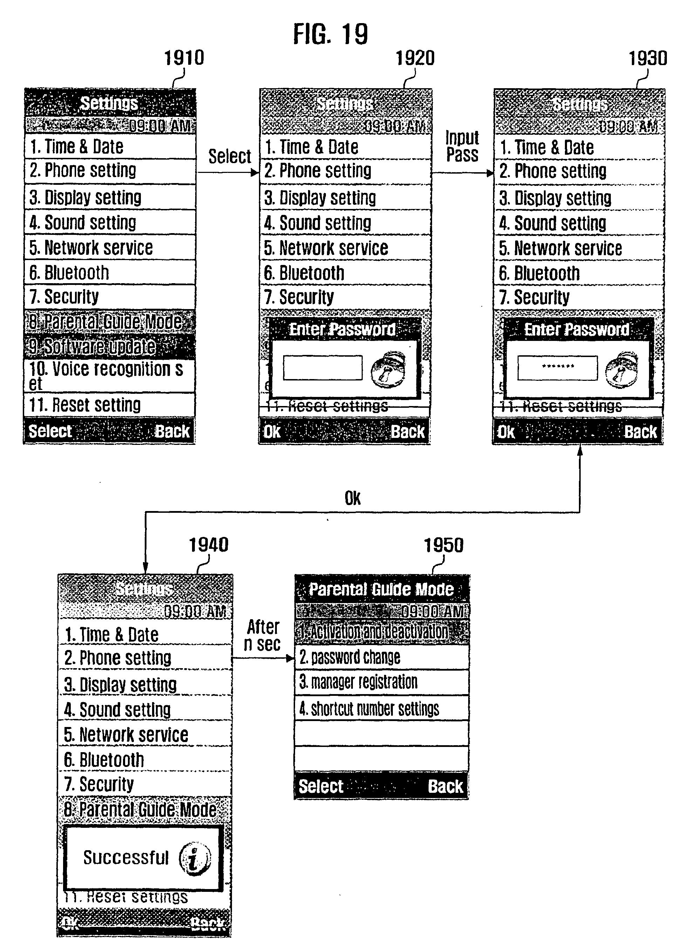

FIG. 19 shows screen images for illustrating steps of configuring settings of a service for operating a service restriction method according to an exemplary embodiment of the present invention.

In particular, FIG. 19 shows the screen images when an access for configuring the settings of the corresponding service successful.

Reference numeral 1910 indicates a screen image showing a setting menu having a plurality of settings menu items, reference numeral 1920 indicates a screen image presenting a password request window displayed when a settings menu item is selected from the settings menu, reference numeral 1930 indicates a screen image presenting the password request window after a password is input, reference numeral 1940 indicates a screen image presenting an announcement message window notifying that the password authentication succeeds, and reference numeral 1950 indicates a screen image presenting a submenu having submenu items related to settings of the selected menu item.

If a settings menu item (for example, "Parental Guide Mode") is selected from the "Settings" menu after entering the "Settings" menu shown in the screen image 1910, the portable phone display the password request window as shown in the screen image of 1920. The password is previously set by the manager. Preferably a basic password is provided for an initial access.

If a password is input through the password request window as shown in the screen image 1930, the portable phone compares the input password with the previously registered password and then determines whether the input password is identical with the registered password.

If the input password is not identical with the registered password, the portable phone requests the input of the correct password again or terminates the authentication process.

If it is determined that the input password is identical with the registered password, the portable phone displays an announcement message window notifying the identification as shown in the screen image 1940. After a predetermined time period, the portable phone displays a submenu having submenu items related to the selected menu item as shown in the screen image 1950. Using options provided by each submenu item of the submenu, the settings and parameters for the service restriction function can be configured.

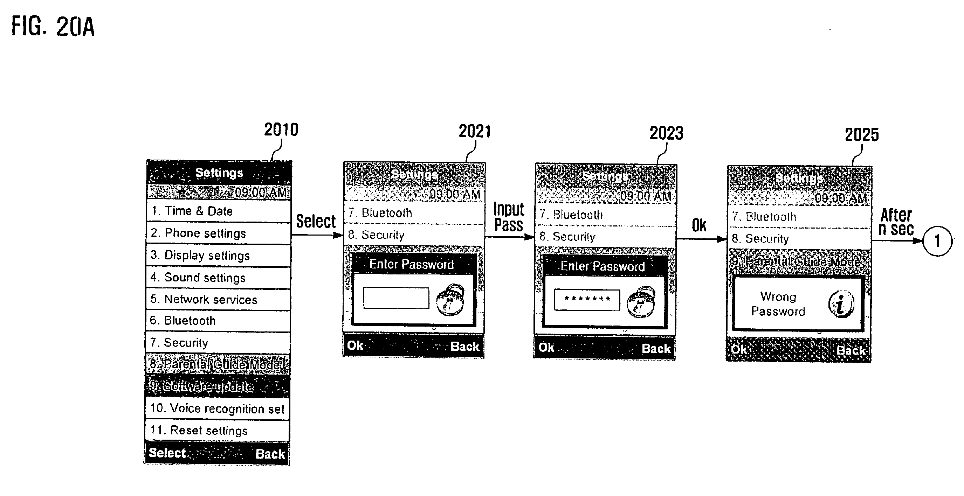

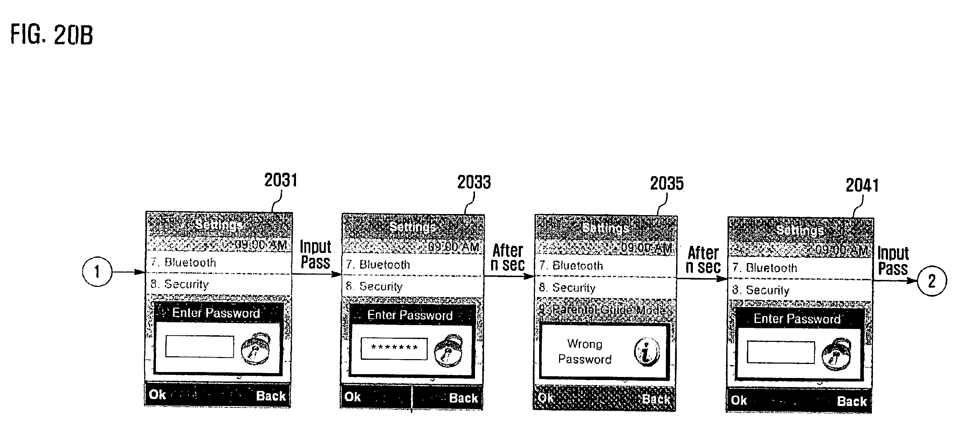

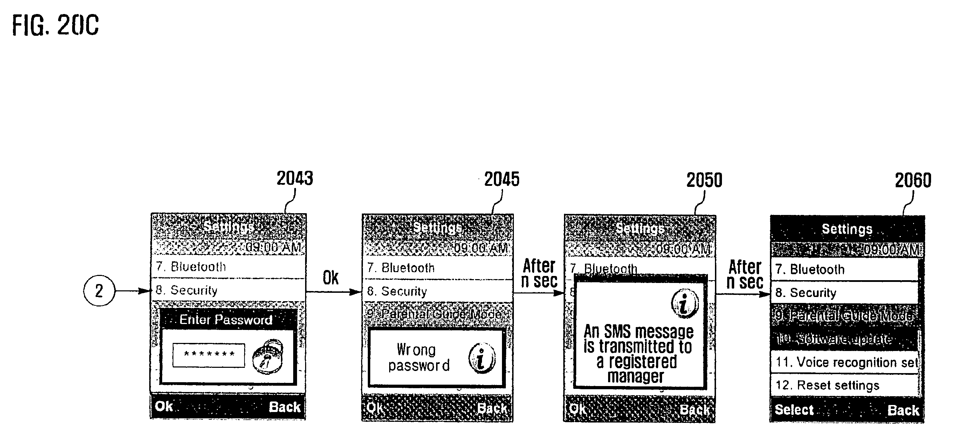

FIG. 20 shows screen images for illustrating steps of processing when an input password is not identical with a registered password. Referring to FIG. 20, reference numeral 2010 indicates a screen image showing a settings menu having a plurality of settings menu items; reference numerals 2021, 2031, and 2041 indicate screen images showing a password request window displayed when a settings menu item is selected or an identification fails with the input password; and reference numerals 2023, 2033, and 2043 indicate screen images showing a password request window after a password is input.

Reference numerals 2025, 2035, and 2045 indicate screen images showing an alarm message notifying that the input password is wrong, reference numeral 2050 indicates a screen image showing an announcement message notifying that an SMS message informing the identification failure is transmitted to a manager, and reference numeral 2060 indicates a screen image of the initial settings menu again as a result of the identification failure.

If a settings menu item (for example, "Parental Guide Mode") is selected from the "Settings" menu as shown in the screen image 2010, the portable phone displays the password request window as shown in the screen image 2021. The password is previously set by the manager and a basic password is provided for an initial access.

If a password is input through the password request window as shown in the screen image 2023, the portable phone determines whether the input password is identical with the registered password.

If the input password is not identical with the registered password, the portable phone outputs an alarm message notifying that the input password is wrong as shown in the screen image 2025. After a predetermined time period, the portable phone displays the password request window again or terminates the authentication process.

The password request is repeated 2 times when the password authentication fails, however the number of repetition times of password request can be changed.

If the password authentication repeatedly fails, the portable phone transmits an SMS message reporting the access attempt failure to a manager whose phone number is previously registered and displays an announcement message notifying the access attempt failure, as shown in the screen image 2050.

The SMS message can be transmitted when the access attempt is successful as well as when the access attempt fails. The SMS message includes the information on the access attempt success or the access attempt failure.

If the password authentication fails after the predetermined number of times, the portable phone denies the access and displays the initial menu screen as shown in the screen image 2060.

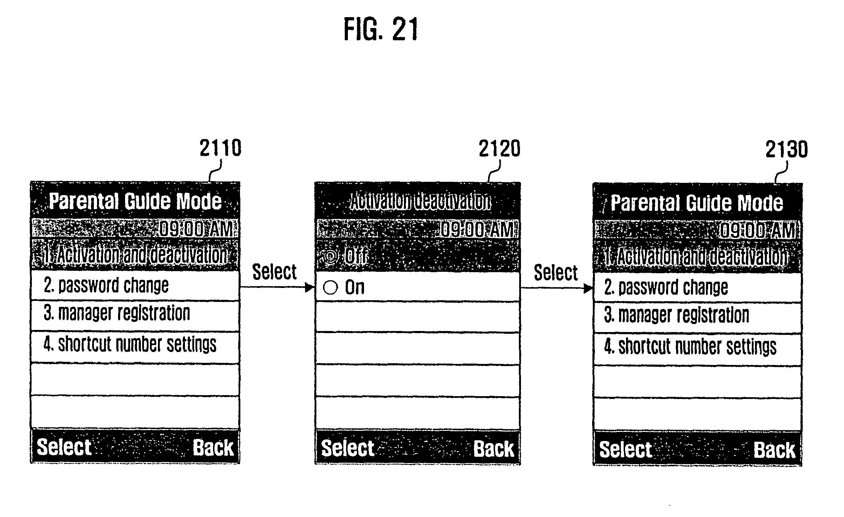

FIG. 21 shows screen images illustrating steps of configuring to enable or disable a service for a service restriction method according to the present invention.

In particular, FIG. 21 presents a submenu provided when the configuration mode access is successful in FIG. 19 and options are provided when the service activation and deactivation menu item is selected from the submenu.

The activation and deactivation menu of the service provides options for enabling or disabling the service.

Referring to FIG. 21, reference numeral 2110 indicates a screen image showing a service-specific menu for configuring a service (for example, "Parental Guide Mode"), reference numeral 2120 indicates a screen image showing an option menu of an activation and deactivation item selected from the submenu, and reference numeral 2130 is a screen image showing the submenu displayed after completion of setting in the option menu.

If an access to the service configuration mode is permitted, the portable phone displays a service-specific menu screen having a plurality of menu items as shown in the screen image 2110.

If a menu item is selected from the service-specific menu, the portable phone displays an option menu corresponding to the menu item as shown in the screen image 2120. After an option is selected from the option menu and the selection is confirmed, the portable phone displays the service-specific menu again as shown in the screen image 2130.

For example, if an activation and deactivation menu item is selected from a Parental Guide Mode service menu as shown in the screen image 2110, the portable phone displays an option menu having On and Off option items as shown in the screen image 2120. If either the On or Off option is selected and the selection is confirmed, the portable phone activates or deactivates the Parental Guide Mode service according to the selected option and then displays the Parental Guide Mode service menu again.

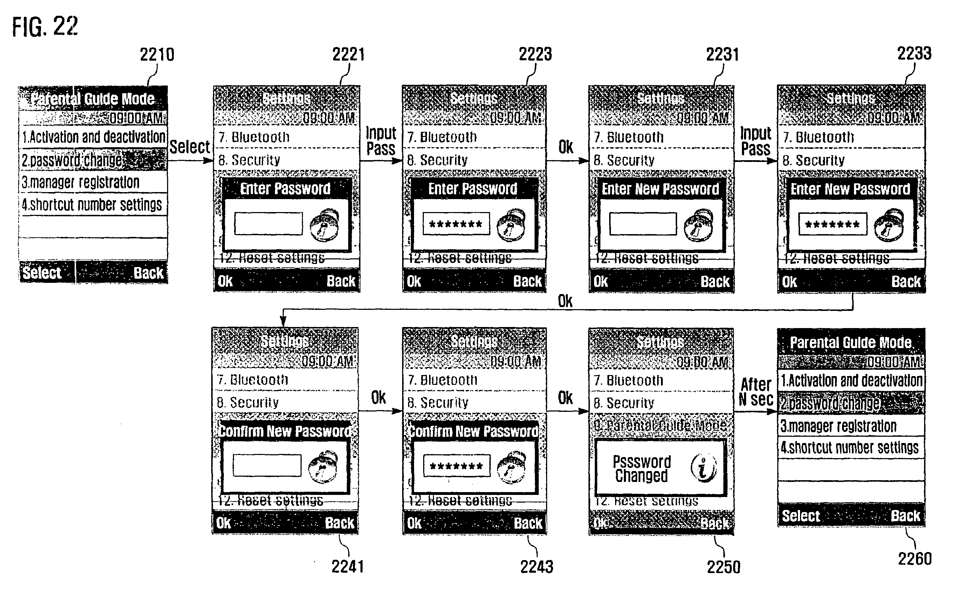

FIG. 22 shows screen images illustrating steps of a password change procedure for a service restriction method according to the present invention.

In particular, FIG. 22 illustrates processes of displaying a service-specific menu dependant on a successful authentication for entering a configuration and changing a password through a password change menu item provided by the service-specific menu.

The password change menu item allows a valid user or manager to change the password for accessing the configuration mode. A basic password is provided by the portable phone for initial access.

Referring to FIG. 22, reference numeral 2210 indicates a screen image showing a service-specific menu for configuring a service (in this embodiment, "Parental Guide Mode" service), reference numeral 2221 indicates a screen image showing a password request window displayed when an item is selected from the service-specific menu, and reference numeral 2223 indicates a screen image showing the password request window after a password is input.

Reference numeral 2231 is a screen image showing a new password request window displayed when the input password is identified, and reference numeral 2233 is a screen image showing the new password request window after a new password is input. Reference numeral 2243 is a screen image showing a new password confirmation request window displayed when a password input is completed, reference numeral 2250 is a screen image showing an announcement message notifying that the password is changed after the new password is confirmed, and reference numeral 2260 is a screen image showing the service-specific menu display after the announcement message disappears.

If a password change menu item is selected from the service-specific menu as shown in the screen image 2210, the portable phone displays the password request window as shown in the screen image 2221.

If a password is input through the password request window as shown in the screen image 2233, the portable phone determines whether the input password is identical with a previously registered password.

If the input password is identical with the registered password, the portable phone displays a new password request window as shown in the screen image 2231.

If a new password is input through the new password request window as shown in the screen image 2233, the portable phone displays a new password confirm window as shown in the screen image 2241, and a new password is input through the new password confirm window as shown in the screen image 2243.

If the new password is correctly input again through the new password confirm window, the portable phone displays an announcement message notifying that the password is changed as shown in the screen image of 2250. After a predetermined time period, the portable phone then displays the service-specific menu as shown in the screen image 2260.

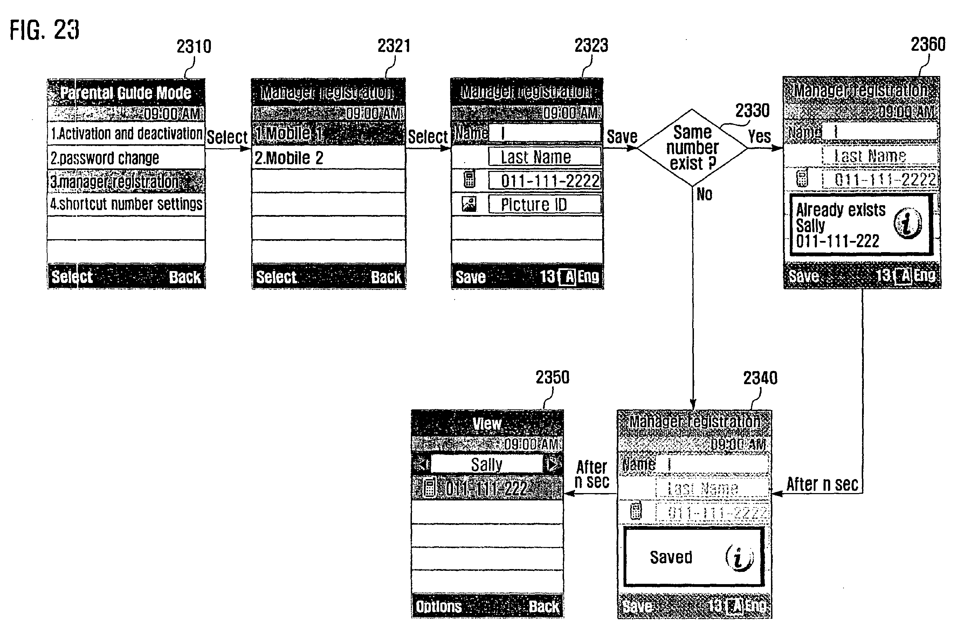

FIG. 23 shows steps of a manager registration procedure for a service restriction method according to the present invention.

In particular, FIG. 23 illustrates processes of displaying a service-specific menu according to a successful authentication for entering the manager registration and registering the manager through the manager registration procedure.

The manager registration menu allows registering a manager responsible for managing the service restriction mode and the phone number of the manager for transmitting SMS messages. Several phone numbers to which the SMS message is transmitted can be registered.

Referring to FIG. 23, if a manager registration menu item is selected from the service-specific menu as shown in the screen image 2310, the portable phone displays a manager registration screen as shown in the screen image 2321. FIG. 23 shows two items for registering respective managers, however, the number of managers is not limited to two but can be changed.

If one of the manager items is selected from the manager registration menu, the portable phone displays a manager-specific registration screen as shown in the screen image 2323. The manager-specific registration screen allows input of information on the manager such as a name, a telephone number, and the like. Preferably, the telephone number is of a phone that can receive the SMS message.

It is preferred that the SMS message is transmitted without accessing WAP. Accordingly, it is preferred that the telephone number of the manager is automatically set to allow for incoming and outgoing calls and SMS messages.

If an instruction for saving the manager information is input after completion of the manager information input, the portable phone determines whether there is any manager information identical with the newly input manager information as shown at the process 2330. Preferably, the determination of the information redundancy is performed by comparing the telephone numbers of the managers.

If there is no telephone number identical with the newly input manager's telephone number, the portable phone saves the newly input manager information as shown in the screen image 2340 and then displays the registered manager list screen as shown in the screen image 2350.

If there is a telephone number identical with the newly input manager's telephone number, the portable phone displays an alarm message notifying that the manager is already registered as shown in the screen image 2360.

Subsequently, the portable phone saves the overlapped manager information in response to a save instruction or automatically after a predetermined time period as shown in the screen image 2340, and then displays the saved manager list as shown in the screen image 2350.

In the example of FIG. 23, the manager items are provided before inputting information on a manager, however, the registration procedure can be modified so information of a person to be registered as a manager can be input before displaying the manager registration screen having the present number of manager items. That is, the order of the processes represented by reference numerals 2321 and 2323 can be changed.

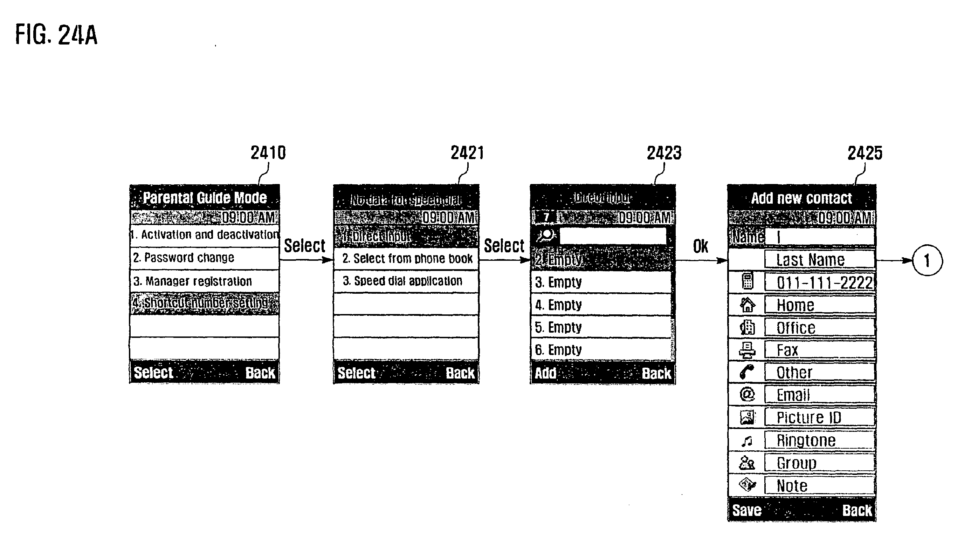

FIG. 24A to 24B show steps of a shortcut number registration procedure for a service restriction method according to the present invention.

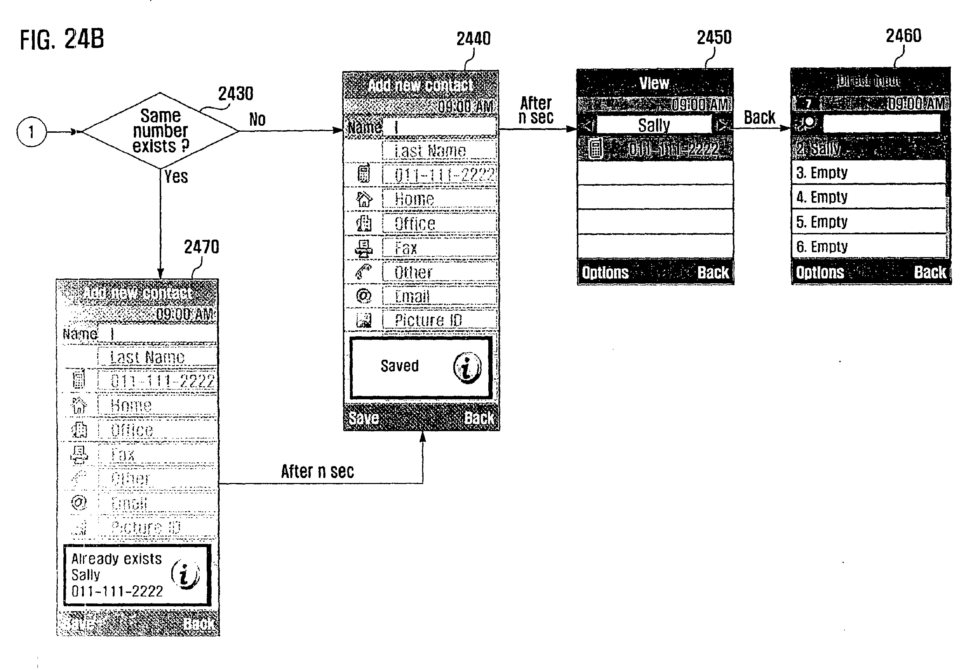

In particular, FIG. 24 illustrates processes of displaying a service-specific menu according to a successful authentication for entering the shortcut registration and registering the shortcut numbers through the shortcut registration procedure.

The shortcut number registration menu as the service-specific menu allows adding, changing, and deleting the shortcut numbers corresponding to the original phone numbers, the shortcut numbers being generated as a single digit number or a two- or more- digit number by combining the numbers 1 to 9.

Referring to FIG. 24, if a shortcut number registration menu item is selected from the service-specific menu ("Parental Guide Mode") as shown in the screen image 2410, the portable phone displays a shortcut number registration menu screen having shortcut number registration menu items as shown in a screen image 2421. The shortcut number registration can be performed through "Direct Registration", "Selection from phone book", and "Speed dial application" items. In FIG. 24, the process of the direct registration is explained as an example.

If a "Direct Registration" menu item is selected from the shortcut number registration menu screen as shown in the screen image 2421, the portable phone displays a shortcut number list having a plurality of shortcut number items as shown in the screen image 2423.

When adding a shortcut number, it is preferred to design the shortcut number list so only empty shortcut numbers (i.e. the shortcut numbers to which no phone number is yet designated) are displayed. When deleting or changing a registered shortcut number, it is preferred to display all the shortcut numbers.

After an empty shortcut number is selected from the shortcut number list (in this example, 2 is selected), the portable phone displays a shortcut number-specific input screen as shown in the screen image 2425. The shortcut number-specific input screen provides various information fields for inputting a name, phone number, and the like.

If the information input is completed and a save instruction is input, the portable phone determines whether there is a previously stored phone number identical with a newly input phone number at a process 2430.

If the same phone number does not exist, the portable phone saves the newly input information corresponding to the selected shortcut number as shown in the screen image 2440 and then displays the saved information with the shortcut number as shown in the screen image 2450. After a predetermined time duration or if a manager's request is input, the shortcut list screen is displayed as shown in the screen image 2460. In the shortcut list screen, each shortcut number is displayed together with registered information such as a name of the phone number owner.

If it is determined that there is a phone number identical with the newly input phone number at the process 2430, the portable phone displays an announcement message notifying that the phone number is already registered to another shortcut number as shown in the screen image 2470.

After a predetermined time duration or if a manager request is input, the portable phone saves the previously registered phone number and the information related to the previously registered phone number or newly input phone number and information related to the newly input phone number as shown in the screen image 2440. The portable phone then displays the saved information with the shortcut number as shown in the screen image 2450.

In FIG. 24, the phone number and the information related to the phone number is input after the shortcut number is selected, however the processes of selecting the shortcut number and inputting the phone number can be changed, i.e. after the phone number and the information related to the phone are input, the shortcut number can be designated for the phone number. That is, the order of the processes represented by the screen images 2423 and 2425 can be changed.

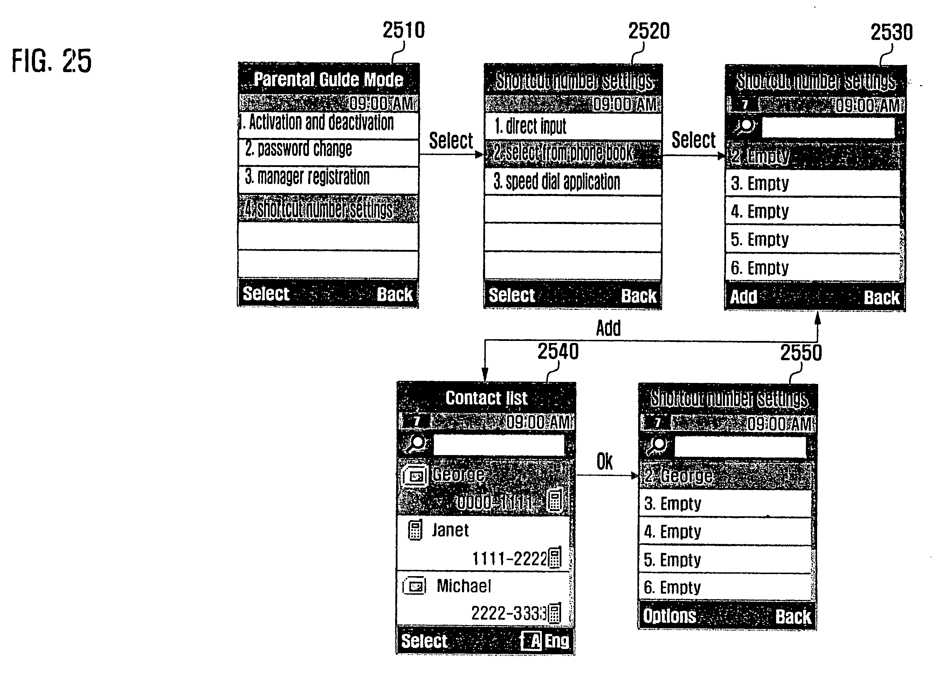

FIG. 25 shows steps of a shortcut number registration procedure for a service restriction method according to the present invention.

In particular, FIG. 25 illustrates a shortcut number registration procedure when a "Selection from phone book" item is selected from the shortcut number registration menu.

Referring to FIG. 25, if a shortcut number registration menu item is selected from the service-specific menu as shown in the screen image 2510, the portable phone displays a shortcut number registration menu having shortcut number registration menu items as shown in the screen image 2520.

If the "Selection from phone book" menu item is selected from the shortcut number registration menu, the portable phone displays a shortcut number list having a plurality of shortcut number items represented by a single or more digits as shown in the screen image 2530.

If a shortcut number is selected from the shortcut number list (in this example, 2 is selected), the portable phone displays a phone number list so as to allow selecting a phone number to be mapped to the shortcut number from the phone number list as shown in the screen image 2540.

If a phone number is selected from the phone number list, the portable phone designates the shortcut number to the selected phone number and saves the phone number and the information related to the phone number in association with the shortcut number. After saving the phone number and the information related to the phone number in association with the shortcut number, the portable phone displays the shortcut number list as shown in the screen image 2550. In the shortcut number list screen the newly designated shortcut number is presented with a name of the phone number owner.

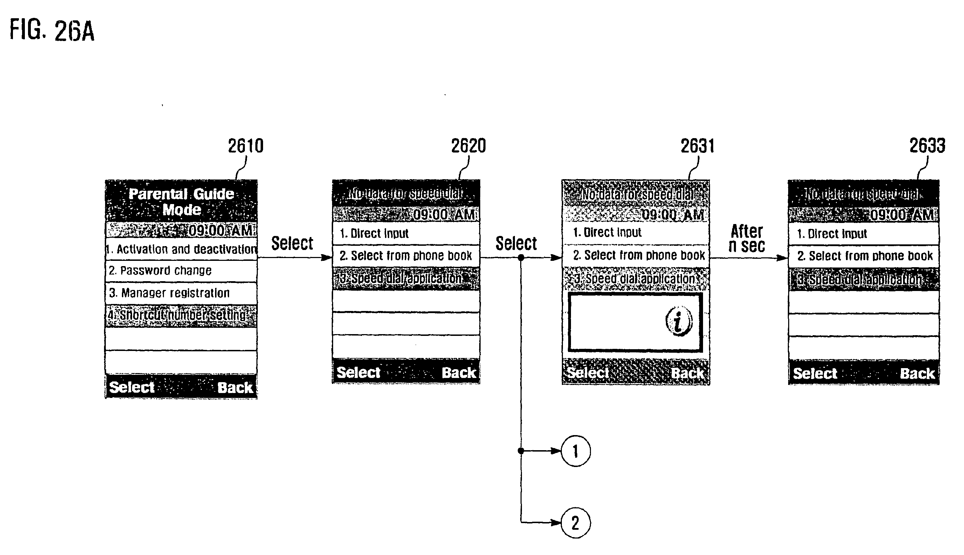

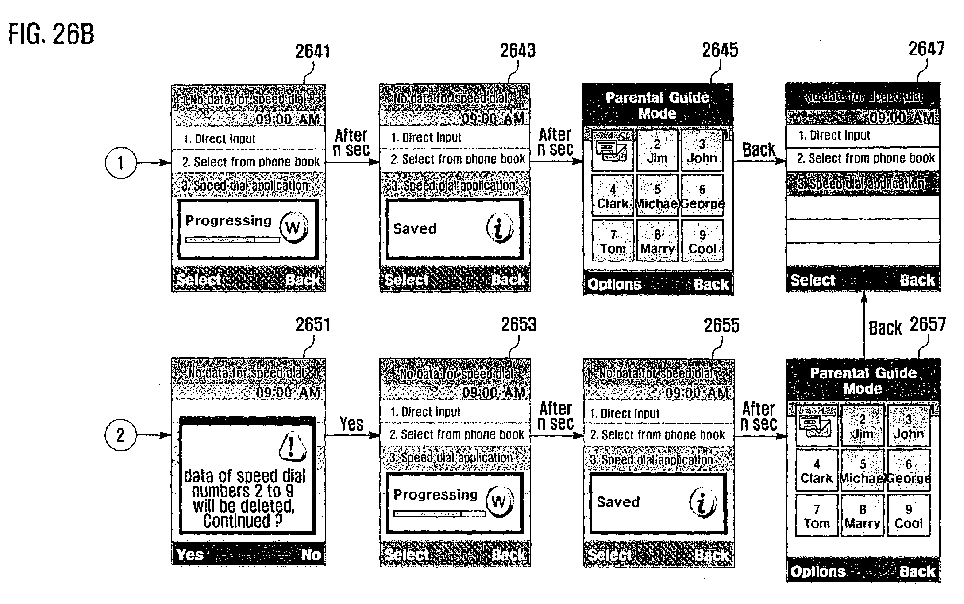

FIG. 26 shows steps of a shortcut number registration procedure for a service restriction method according to the present invention.

In particular, FIG. 26 illustrates a shortcut number registration procedure when a "speed dial application" item is selected from the short number registration menu.

Referring to FIG. 26, if a shortcut number registration menu item is selected from the service-specific menu as shown in the screen image 2610, the portable phone displays a shortcut number registration menu having shortcut number registration menu items as shown in the screen image 2620.

If the "Speed dial application" menu item is selected from the shortcut number registration menu, the portable phone determines whether there is data set by a speed dial application.

If there is no data input by the speed dial application, the portable phone displays an alarm message notifying that there is no data set by the speed dial application as shown in the screen image 2631, and then displays the shortcut number registration menu again after a predetermined time period as shown in the screen image 2633.

If there is data set by the speed dial application, the portable phone determines whether an available speed dial button exists. If at least one available speed dial button exists, the portable phone loads the data set by the speed dial application to the available speed dial button while displaying the processing status as shown in the screen image 2641 and saves the loaded data in association with the speed dial button while displaying the saving status as shown in the screen image 2643. After a predetermined time period, the portable phone then displays the speed dial menu having the speed dial buttons (shortcut number buttons) as shown in the screen image 2645. After the speed dial buttons for speed dial are registered to the allowed service, the portable phone displays the shortcut number registration menu again as shown in the screen image 2647.

If there is no available speed dial button, the portable phone displays an alarm message (for example, "Data of numbers 2 to 9 will be deleted. Continue?") notifying that the data stored for the speed dial buttons will be deleted, as shown in the screen image 2651.

If a deletion confirmation signal is input, the portable phone deletes the data previously associated with the speed dial buttons while displaying the deletion status as shown in the screen image 2653. After deletion of the previous data, the portable phone saves the newly loaded data in association with the speed dial button while displaying the saving status as shown in the screen image 2655. After a predetermined time period, the portable phone displays the updated speed dial buttons as shown in the screen image 2657.

Although preferred embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

As described above, the service restriction apparatus and method of the present invention can selectively restrict utilization of pay-per-use services, such as outgoing/incoming call, SMS/MMS/VMS message, data communication, etc., whereby abuse of the service can be reduced.

The service restriction apparatus and method of the present invention can also manage utilization of services using a service-allowed phone number list to which outgoing/incoming call-allowed phone number are registered and an allowed service list to which the services allowed by a manager are registered, resulting in effective service restriction.

The service restriction apparatus and method of the present invention also enables effective protection from the abuse of services, resulting in reduction of service utilization costs.

Further, the service restriction apparatus and method of the present invention can protect adolescent users from accessing adult contents and illegal use.

In addition, the service restriction apparatus and method of the present invention enables a third party manager (e.g. parents) to manage utilization of a portable phone belonging to users (e.g. children).

## Claims

1. A service utilization restriction method for a portable communication device, comprising:
checking (S1103), when a service request is detected (S1101), which service is requested;
if the requested service is an outgoing/incoming call service:
determining (S1111) whether a service restriction function is activated;
permitting (S1115) the outgoing/incoming call service if the service restriction function is not activated;
determining (S1113) whether a phone number of the service request is registered in an outgoing/incoming call allowed phone number list if the service restriction function is activated;
attempting (S1115) to establish a call if the phone number is registered in the outgoing/incoming call allowed phone number list; and
blocking the request if the phone number is not registered in the outgoing/incoming call allowed phone number list, and displaying (S1117) an announcement message notifying that the phone number is blocked for the outgoing/incoming call service;
if the requested service is a Short Message Service/Multimedia Messaging ServiceNoice Messaging Service, SMS/MMSNMS, service:
determining (S1121) whether a service restriction function is activated;
permitting (S1125) the SMS/MMSNMS service if the service restriction function is not activated;
determining (S1123) whether the SMS/MMSNMS service is registered in an allowed service list if the service restriction function is activated;
permitting (S1125) and activating the SMS/MMSNMS service if the SMS/MMSNMS service is registered in the allowed service list; and
restricting utilization of the SMS/MMSNMS service and displaying (S1127) an announcement message notifying that use of the service is refused, if the SMS/MMSNMS service is not registered in the allowed service list; and
if the requested service is a data communication service:
determining (S1131) whether a service restriction function is activated;
permitting (S1135) the data communication service if the service restriction function is not activated;
determining (S1133) whether the data communication service is registered in the allowed service list if the service restriction function is activated;
permitting (S1135) the data communication service if the data communication service is registered in the allowed service list; and
restricting utilization of the data communication service and displaying (S1137) an announcement message notifying that use of the service is refused, if the data communication service is not registered in the allowed service list.

2. The service utilization restriction method of claim 1, further comprising:
requesting (1920, 2021, 2031, 2041, S1703) a password when an attempt to enter a service restriction function configuration mode is performed (1910, S1701);
authenticating (S1705), if a password is input (1930, 2023, 2033, 2043), the password;
permitting (1940) entering the service restriction function configuration mode if the password is successfully authenticated; and
blocking (2025, 2035, 2045) entering the service restriction function configuration mode and outputting an announcement message notifying that entrance is refused if the password fails.

3. The service utilization restriction method of claim 2, wherein the service restriction function configuration mode allows registering (2340) at least one manager and at least one phone number of the at least one manager.

4. The service utilization restriction method of claim 3, further comprising transmitting an alarm message informing of the attempt to enter service restriction function configuration mode to the at least one manager using an associated phone number.

5. The service utilization restriction method of claim 4, wherein the alarm message includes information on the attempt to enter the service restriction function configuration mode and information on an authentication of the password.

6. The service utilization restriction method of claim 2, wherein the password includes a Personal Identification Number (PIN).

7. The service utilization restriction method of claim 2, wherein authenticating the password is performed by comparing the input password to a stored password.

8. The service utilization restriction method of claim 2, wherein the service restriction function configuration mode allows changing settings of and registration of an outgoing/incoming call service, a Short Message Service/Multimedia Messaging Service/Voice Messaging Service service, and a data communication service.

9. The service utilization restriction method of claim 8, wherein the settings of the outgoing/incoming call service allow registration of phone numbers permitting outgoing/incoming calls and shortcut numbers designated to the phone numbers.

10. The service utilization restriction method of claim 9, wherein registration of phone numbers and shortcut numbers includes:
providing an empty shortcut number or requesting input of a shortcut number; and
mapping a phone number to the empty shortcut number or to the shortcut number input in response to requesting input of a shortcut number.

11. The service utilization restriction method of claim 10, wherein the phone number can be registered for at least one of incoming calls and outgoing calls.

12. The service utilization restriction method of claim 8, wherein the settings of the Short Message Service/Multimedia Messaging Service/Voice Messaging Service service and the data communication service allow classifying the services into utilization-allowed services and utilization-refused services, and selectively registering the services as the utilization-allowed services and the utilization-refused services.

13. A service utilization restriction apparatus for a portable communication device, comprising:
a memory (311);
a service restriction unit (319) for checking, if a service is requested, conditions of the service restriction mode and processing the service request based on the conditions of the service restriction mode;
a controller (301) for controlling checking a status of the service restriction mode, determining whether to register a requested service according to the status of the service restriction mode, and permitting or blocking the utilization of the requested service based on the service restriction mode status; and
a display unit (317) displaying screen images related to the service restriction function and announcement messages notifying a processing status of the service restriction function,
wherein the memory stores application programs with computer-executable instructions that cause the service restriction unit, the controller and the display unit to perform the steps of one of the methods in claims 1 to 12.

14. The service utilization restriction apparatus of claim 13, wherein the memory (311) stores:
a program determining whether to activate the service restriction mode if a request is received for using a service;
a program determining whether the service is registered in an allowed service list if the service restriction mode is activated;
a program for outputting an announcement message notifying that the service restriction mode is activated if the service is not registered in the allowed service list;
a program for performing the service if the service is registered in the allowed service list; and
a program for extracting information on settings of the service restriction mode and controlling allowance and refusal of the utilization of the service.

15. The service utilization restriction apparatus of claim 13, wherein the memory (311) stores:
a program determining, if an outgoing/incoming call is detected, whether a phone number of the outgoing/incoming call is registered in an outgoing/incoming call allowed phone number list;
a program permitting the outgoing/incoming call if the phone number is registered in the outgoing/incoming call allowed phone number list;
a program blocking the outgoing/incoming call if the phone number is not registered in the outgoing/incoming call allowed phone number list;
a program outputting, an announcement message notifying that the outgoing/incoming call is blocked; and
a program transmitting, to a previously registered manager's phone number, an announcement message notifying of an attempt to enter a service restriction mode configuration.

## Patentansprüche

1. Dienstnutzungs-Einschränkungsverfahren für eine tragbare Kommunikationsvorrichtung, umfassend:
Überprüfen (S1103), wenn eine Dienstanforderung ermittelt wird (S1101), welcher Dienst angefordert wird;
wenn der angeforderte Dienst ein ausgehender/ankommender Anrufdienst ist:
Bestimmen (S1111), ob eine Diensteinschränkungsfunktion aktiviert ist;
Zulassen (S1115) des ausgehenden/ankommenden Anrufdienstes, wenn die Diensteinschränkungsfunktion nicht aktiviert ist;
Bestimmen (S1113), ob eine Telefonnummer der Dienstanforderung in einer Rufnummernliste für zulässige ausgehende/ankommende Anrufe registriert ist, wenn die Diensteinschränkungsfunktion aktiviert ist;
Versuchen (S1115), einen Anruf aufzubauen, wenn die Telefonnummer in der Rufnummernliste für zulässige ausgehende/ankommende Anrufe registriert ist; und
Blockieren der Anforderung, wenn die Telefonnummer nicht in der Rufnummernliste für zulässige ausgehende/ankommende Anrufe registriert ist und Anzeigen (S1117) einer Meldenachricht, dass die Telefonnummer für den ausgehenden/ankommenden Anrufdienst blockiert wurde;
wenn der angeforderte Dienst ein Kurznachrichtendienst/Multimedia-Nachrichtendienst/Sprachnachrichtendienst, SMS/MMS/VMS-Dienst ist:
Bestimmen (S1121), ob eine Diensteinschränkungsfunktion aktiviert ist;
Zulassen (S1125) des SMS/MMS/VMS-Dienstes, wenn die Diensteinschränkungsfunktion nicht aktiviert ist;
Bestimmen (S1123), ob der SMS/MMS/VMS-Dienst in einer Liste für zulässige Dienste registriert ist, wenn die Diensteinschränkungsfunktion aktiviert ist;
Zulassen (S1125) und Aktivieren des SMS/MMS/VMS-Dienstes, wenn der SMS/MMS/VMS-Dienst in der Liste für zulässige Dienste registriert ist; und
Beschränken der Nutzung des SMS/MMS/VMS-Dienstes und Anzeigen (S1127) einer Meldenachricht, dass die Nutzung des Dienstes verweigert wurde, wenn der SMS/MMS/VMS-Dienst nicht in der Liste für zulässige Dienste registriert ist; und
wenn der angeforderte Dienst ein Datenkommunikationsdienst ist:
Bestimmen (S1131), ob eine Diensteinschränkungsfunktion aktiviert ist;
Zulassen (S1135) des Datenkommunikationsdienstes, wenn die Diensteinschränkungsfunktion nicht aktiviert ist;
Bestimmen (S1133), ob der Datenkommunikationsdienst in der Liste für zulässige Dienste registriert ist, wenn die Diensteinschränkungsfunktion aktiviert ist;
Zulassen (S1135) des Datenkommunikationsdienstes, wenn der Datenkommunikationsdienst in der Liste für zulässige Dienste registriert ist; und
Beschränken der Nutzung des Datenkommunikationsdienstes und Anzeigen (S1137) einer Meldenachricht, dass die Nutzung des Dienstes verweigert wurde, wenn der Datenkommunikationsdienst nicht in der Liste für zulässige Dienste registriert ist.

2. Dienstnutzungs-Einschränkungsverfahren nach Anspruch 1, des Weiteren umfassend:
Anfordern (1920, 2021, 2031, 2041, S1703) eines Passworts, wenn ein Versuch zum Eintreten in einen Diensteinschränkungsfunktions-Konfigurationsmodus durchgeführt wird (1910, S1701);
Authentifizieren (S1705) des Passworts, wenn ein Passwort eingegeben wird (1930, 2023, 2033, 2043);
Zulassen (1940) des Eintretens in den Diensteinschränkungsfunktions-Konfigurationsmodus, wenn das Passwort erfolgreich authentifiziert wurde; und
Blockieren (2025, 2035, 2045) des Eintretens in den Diensteinschränkungsfunktions-Konfigurationsmodus und Ausgeben einer Meldenachricht, dass der Eintritt verweigert wurde, wenn das Passwort fehlerhaft war.

3. Dienstnutzungs-Einschränkungsverfahren nach Anspruch 2, wobei der Diensteinschränkungsfunktions-Konfigurationsmodus das Registrieren (2340) von mindestens einem Manager und mindestens einer Telefonnummer des mindestens einen Managers ermöglicht.

4. Dienstnutzungs-Einschränkungsverfahren nach Anspruch 3, des Weiteren umfassend das Senden einer Warnmeldung an den mindestens einen Manager unter Verwendung einer zugeordneten Telefonnummer, dass der Versuch des Eintretens in einen Diensteinschränkungsfunktions-Konfigurationsmodus gemacht wurde.

5. Dienstnutzungs-Einschränkungsverfahren nach Anspruch 4, wobei die Warnmeldung Informationen über den Eintrittsversuch in den Diensteinschränkungsfunktions-Konfigurationsmodus und Informationen über eine Authentifizierung des Passworts enthält.

6. Dienstnutzungs-Einschränkungsverfahren nach Anspruch 2, wobei das Passwort eine persönliche Identifikationsnummer (PIN) enthält.

7. Dienstnutzungs-Einschränkungsverfahren nach Anspruch 2, wobei das Authentifizieren des Passworts durch Vergleichen des eingegebenen Passworts mit einem gespeicherten Passwort durchgeführt wird.

8. Dienstnutzungs-Einschränkungsverfahren nach Anspruch 2, wobei der Diensteinschränkungsfunktions-Konfigurationsmodus das Ändern der Einstellungen von und die Registrierung von einem ausgehenden/ankommenden Anrufdienst, einem Kurznachrichtendienst/Multimedia-Nachrichtendienst/Sprachnachrichtendienst und einem Datenkommunikationsdienst ermöglicht.

9. Dienstnutzungs-Einschränkungsverfahren nach Anspruch 8, wobei die Einstellungen des ausgehenden/ankommenden Anrufdienstes die Registrierung von Telefonnummern, welche die ausgehenden/ankommenden Anrufe zulassen sowie den Telefonnummern zugewiesene Kurzanwahlnummern ermöglicht.

10. Dienstnutzungs-Einschränkungsverfahren nach Anspruch 9, wobei die Registrierung von Telefonnummern und Kurzanwahlnummern beinhaltet:
Bereitstellen einer freien Kurzanwahinummer oder Anfordern der Eingabe einer Kurzanwahlnummer; und
Zuordnen einer Telefonnummer zu der freien Kurzanwahlnummer oder zu der als Reaktion auf die Anforderung der Eingabe einer Kurzanwahlnummer eingegebene Kurzanwahlnummer.

11. Dienstnutzungs-Einschränkungsverfahren nach Anspruch 10, wobei die Telefonnummer für mindestens eines aus ankommenden Anrufen und ausgehenden Anrufen registriert werden kann.

12. Dienstnutzungs-Einschränkungsverfahren nach Anspruch 10, wobei die Einstellungen des Kurznachrichtendientes/Multimedia-Nachrichtendienstes/Sprachnachrichtendientes und des Datenkommunikationsdienstes die Klassifizierung der Dienste in Nutzungs-zugelassene Dienste und Nutzungs-verweigerte Dienste und das selektive Registrieren der Dienste als Nutzungs-zugelassene Dienste und Nutzungs-verweigerte Dienste ermöglichen.

13. Dienstnutzungs-Einschränkungsvorrichtung für eine tragbare Kommunikationsvorrichtung, umfassend:
einen Speicher (311);
eine Diensteinschränkungseinheit (319) zum Überprüfen, wenn ein Dienst angefordert wurde, der Bedingungen des Diensteinschränkungsmodus und Verarbeiten der Dienstanforderung auf Basis der Bedingungen des Diensteinschränkungsmodus;
eine Steuerung (301) zum Steuern des Überprüfens eines Status des Diensteinschränkungsmodus, des Bestimmens, ob ein angeforderter Dienst gemäß dem Status des Diensteinschränkungsmodus registriert werden soll, und des Zulassens oder Blockierens der Nutzung des angeforderten Dienstes auf Basis des Status des Diensteinschränkungsmodus; und
eine Anzeigeeinheit (317) zum Anzeigen von Bildschirmbildern, welche mit der Diensteinschränkungsfunktion in Zusammenhang stehen, und von Meldenachrichten, die einen Verarbeitungsstatus der Diensteinschränkungsfunktion melden,
wobei der Speicher Anwendungsprogramme mit computerausführbaren Befehlen speichert, welche die Diensteinschränkungseinheit, die Steuerung und die Anzeigeeinheit zum Durchführen der Schritte aus einem der Verfahren nach den Ansprüchen 1 bis 12 veranlassen.

14. Dienstnutzungs-Einschränkungsvorrichtung nach Anspruch 13, wobei der Speicher (311) speichert:
ein Programm, das bestimmt, ob der Diensteinschränkungsmodus aktiviert werden soll, wenn eine Anforderung zur Nutzung eines Dienstes empfangen wird;
ein Programm, das bestimmt, ob der Dienst in einer Liste für zulässige Dienste registriert ist, wenn der Diensteinschränkungsmodus aktiviert wurde;
ein Programm zum Ausgeben einer Meldenachricht, dass der Diensteinschränkungsmodus aktiviert wurde, wenn der Dienst nicht in der Liste für zulässige Dienste registriert ist;
ein Programm zum Durchführen des Dienstes, wenn der Dienst in der Liste für zulässige Dienste registriert ist; und
ein Programm zum Extrahieren von Informationen zu den Einstellungen des Diensteinschränkungsmodus und zum Steuern von Zulassen und Verweigern der Nutzung des Dienstes.

15. Dienstnutzungs-Einschränkungsvorrichtung nach Anspruch 13, wobei der Speicher (311) speichert:
ein Programm, das bestimmt, wenn ein ausgehender/ankommender Anruf ermittelt wird, ob eine Telefonnummer des ausgehenden/ankommenden Anrufs in einer Rufnummernliste für zulässige ausgehende/ankommende Anrufe registriert ist;
ein Programm, das den ausgehenden/ankommenden Anruf zulässt, wenn die Telefonnummer in der Rufnummernliste für zulässige ausgehende/ankommende Anrufe registriert ist;
ein Programm, das den ausgehenden/ankommenden Anruf blockiert, wenn die Telefonnummer nicht in der Rufnummernliste für zulässige ausgehende/ankommende Anrufe registriert ist;
ein Programm, das eine Meldenachricht ausgibt, dass der ausgehende/ankommende Anruf blockiert wurde; und
ein Programm, das an eine zuvor registrierte Telefonnummer eines Managers eine Meldenachricht sendet, dass ein Versuch zum Eintritt in eine Diensteinschränkungsmoduskonfiguration unternommen wurde.

## Revendications

1. Procédé de restriction d'utilisation de service pour un dispositif de communication portable, comprenant :
lorsqu'une demande de service est détectée (S1101), la vérification (S1103) du service qui est demandé ;
si le service demandé est un service d'appel sortant/entrant :
la détermination (S1111) du fait qu'une fonction de restriction de service est activée ;
l'autorisation (S1115) du service d'appel sortant/entrant si la fonction de restriction de service n'est pas activée ;
la détermination (S1113) du fait qu'un numéro de téléphone de la demande de service est enregistré dans une liste de numéros de téléphone autorisés d'appels sortants/entrants, si la fonction de restriction de service est activée ;
la tentative (S1115) d'établir un appel si le numéro de téléphone est enregistré dans la liste de numéros de téléphone autorisés d'appels sortants/entrants ; et
le blocage de la demande si le numéro de téléphone n'est pas enregistré dans la liste de numéros de téléphone autorisés d'appels sortants/entrants, et l'affichage (S1117) d'un message d'annonce avertissant que le numéro de téléphone est bloqué pour le service d'appels sortants/entrants ;
si le service demandé est un service de messages courts/service de messagerie multimédia/service de messagerie vocale, SMS/MMS/VMS :
la détermination (S1121) du fait qu'une fonction de restriction de service est activée ;
l'autorisation (S1125) du service SMS/MMS/VMS si la fonction de restriction de service n'est pas activée ;
la détermination (S1123) du fait que le service SMS/MMS/VMS est enregistré dans une liste de services autorisés si la fonction de restriction de service est activée;
l'autorisation (S1125) et l'activation du service SMS/MMS/VMS si le service SMS/MMS/VMS est enregistré dans la liste de services autorisés ; et
la restriction de l'utilisation du service SMS/MMS/VMS et l'affichage (S1127) d'un message d'annonce avertissant que l'utilisation du service est refusée, si le service SMS/MMS/VMS n'est pas enregistré dans la liste de services autorisés ; et
si le service demandé est un service de communication de données :
la détermination (S1131) du fait qu'une fonction de restriction de service est activée ;
l'autorisation (S1135) du service de communication de données si la fonction de restriction de service n'est pas activée ;
la détermination (S1133) du fait que le service de communication de données est enregistré dans la liste de services autorisés si la fonction de restriction de service est activée ;
l'autorisation (S1135) du service de communication de données si le service de communication de données est enregistré dans la liste de services autorisés ; et
la restriction de l'utilisation du service de communication de données et l'affichage (S1137) d'un message d'annonce avertissant que l'utilisation du service est refusée, si le service de communication de données n'est pas enregistré dans la liste de services autorisés.

2. Procédé de restriction d'utilisation de service selon la revendication 1, comprenant en outre :
la demande (1920, 2021, 2031, 2041, S1703) d'un mot de passe lorsqu'une tentative pour entrer dans un mode de configuration de fonction de restriction de service est effectuée (1910, S1701) ;
l'authentification (S1705) du mot de passe, si un mot de passe est appliqué en entrée (1930, 2023, 2033, 2043) ;
l'autorisation (1940) d'entrer dans le mode de configuration de fonction de restriction de service si l'authentification du mot de passe a réussi ; et
le blocage (2025, 2035, 2045) de l'entrée dans le mode de configuration de fonction de restriction de service et la fourniture en sortie d'un message d'annonce avertissant que l'entrée est refusée si le mot de passe échoue.

3. Procédé de restriction d'utilisation de service selon la revendication 2, dans lequel le mode de configuration de fonction de restriction de service permet d'enregistrer (2340) au moins un gestionnaire et au moins un numéro de téléphone de l'au moins un gestionnaire.

4. Procédé de restriction d'utilisation de service selon la revendication 3, comprenant en outre la transmission d'un message d'alarme à l'au moins un gestionnaire, informant de la tentative d'entrée dans le mode de configuration de fonction de restriction de service, en utilisant un numéro de téléphone associé.

5. Procédé de restriction d'utilisation de service selon la revendication 4, dans lequel le message d'alarme comporte des informations relatives à la tentative d'entrée dans le mode de configuration de fonction de restriction de service et des informations relatives à une authentification du mot de passe.

6. Procédé de restriction d'utilisation de service selon la revendication 2, dans lequel le mot de passe comporte un numéro d'identification personnel (PIN).

7. Procédé de restriction d'utilisation de service selon la revendication 2, dans lequel l'authentification du mot de passe est effectuée en comparant le mot de passe d'entrée à un mot de passe enregistré.

8. Procédé de restriction d'utilisation de service selon la revendication 2, dans lequel le mode de configuration de fonction de restriction de service permet de modifier les réglages et l'enregistrement d'un service d'appel sortant/entrant, d'un service de messages courts/service de messagerie multimédia/service de messagerie vocale et d'un service de communication de données.

9. Procédé de restriction d'utilisation de service selon la revendication 8, dans lequel les réglages du service d'appel sortant/entrant permettent l'enregistrement de numéros de téléphone autorisant des appels sortants/entrants et de numéros abrégés désignant les numéros de téléphone.

10. Procédé de restriction d'utilisation de service selon la revendication 9, dans lequel l'enregistrement des numéros de téléphone et des numéros abrégés comporte :
la fourniture d'un numéro abrégé vide ou la demande d'entrée d'un numéro abrégé ; et
la mise en correspondance d'un numéro de téléphone avec le numéro abrégé vide ou le numéro abrégé entré en réponse à la demande d'entrée d'un numéro abrégé.

11. Procédé de restriction d'utilisation de service selon la revendication 10, dans lequel le numéro de téléphone peut être enregistré pour au moins l'un des appels entrants et des appels sortants.

12. Procédé de restriction d'utilisation de service selon la revendication 8, dans lequel les réglages du service de messages courts/service de messagerie multimédia/service de messagerie vocale et du service de communication de données permettent de classer les services en services d'utilisation autorisée et services d'utilisation refusée, et d'enregistrer les services de manière sélective en tant que services d'utilisation autorisée et services d'utilisation refusée.

13. Dispositif de restriction d'utilisation de service pour un dispositif de communication portable, comprenant :
une mémoire (311) ;
une unité de restriction de service (319) pour vérifier, si un service est demandé, des conditions du mode de restriction de service et traiter la demande de service en se basant sur les conditions du mode de restriction de service ;
un contrôleur (301) pour contrôler la vérification de l'état du mode de restriction de service, déterminer s'il faut enregistrer un service demandé en fonction de l'état du mode de restriction de service, et autoriser ou bloquer l'utilisation du service demandé en se basant sur l'état du mode de restriction de service ; et
une unité d'affichage (317) affichant des images sur un écran relatives à la fonction de restriction de service et des messages d'annonce avertissant de l'état de traitement de la fonction de restriction de service,
dans lequel la mémoire contient des programmes d'application avec des instructions exécutables par un ordinateur qui font exécuter les étapes de l'un des procédés selon les revendications 1 à 12 par l'unité de restriction de service, le contrôleur et l'unité d'affichage.

14. Dispositif de restriction d'utilisation de service selon la revendication 13, dans lequel la mémoire (311) contient :
un programme déterminant s'il faut activer le mode de restriction de service si une demande d'utilisation d'un service est reçue ;
un programme déterminant si le service est enregistré dans une liste de services autorisés si le mode de restriction de service est activé ;
un programme pour fournir en sortie un message d'annonce avertissant que le mode de restriction de service est activé si le service n'est pas enregistré dans la liste de services autorisés ;
un programme pour exécuter le service si le service est enregistré dans la liste de services autorisés ; et
un programme pour extraire des informations concernant les réglages du mode de restriction de service et commander l'autorisation et le refus de l'utilisation du service.

15. Dispositif de restriction d'utilisation de service selon la revendication 13, dans lequel la mémoire (311) contient :
un programme déterminant, si un appel sortant/entrant est détecté, si un numéro de téléphone de l'appel sortant/entrant est enregistré dans une liste de numéros de téléphone autorisés d'appels sortants/entrants ;
un programme autorisant l'appel sortant/entrant si le numéro de téléphone est enregistré dans la liste de numéros de téléphone autorisés d'appels sortants/entrants ;
un programme bloquant l'appel sortant/entrant si le numéro de téléphone n'est pas enregistré dans la liste de numéros de téléphone autorisés d'appels sortants/entrants ;
un programme fournissant en sortie un message d'annonce avertissant que l'appel sortant/entrant est bloqué ; et
un programme transmettant à un numéro de téléphone d'un gestionnaire précédemment enregistré, un message d'annonce avertissant d'une tentative d'entrée dans une configuration de mode de restriction de service.
